# EUROPEAN PATENT APPLICATION

(11) **EP 4 819 711 A1**
(43) Date of publication of application: **07.10.2026**
(21) Application number: 23959970.7
(22) Date of filing: 01.12.2023
(51) Int. Cl.: H04W 72/04

(54) **INFORMATION TRANSMISSION METHOD AND APPARATUS, DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); ZHANG, Yi, Dongguan, Guangdong 523860 (CN); XU, Jing, Dongguan, Guangdong 523860 (CN)
(74) Representative: Taor, Simon Edward William
(86) International application number: PCT/CN2023/135974
(87) International publication number: WO 2025/112064

(57) **Abstract**

The present application belongs to the technical field of communications. Disclosed are an information transmission method and apparatus, a device, a medium and a program product. The method is executed by a first communication device, the method comprising: sending or receiving first information, the first information being used for determining transmission characteristic information corresponding to a first information transmission group between the first communication device and a second communication device, and the first information transmission group comprising at least two information transmissions. In the method, communication devices determine transmission characteristic information in advance, so that signaling overheads can be saved in information transmissions, improving the transmission efficiency of communication systems.

## Description

### TECHNICAL FIELD

The present disclosure relates to the technical field of communications, and more particularly to, a method for information transmission, an apparatus, a device, a medium and a program product.

### BACKGROUND

With the continuous development of the communication technology, in some communication scenarios, information transmission between communication devices has agreed transmission characteristic information, such as, a data arrival time, data volume, a data transmission direction, a data type and other transmission characteristic information.

### SUMMARY

The present disclosure provides a method for information transmission, an apparatus, a device, a medium and a program product. The technical solution at least includes followings.

According to an aspect of embodiments of the present disclosure, there is provided a method for information transmission. The method is performed by a first communication device, and the method includes a following operation.

First information is sent or received. The first information is used for determining transmission characteristic information corresponding to a first information transmission group between the first communication device and a second communication device. The first information transmission group includes at least two information transmissions.

According to another aspect of the embodiments of the present disclosure, there is provided a first device for information transmission. The device includes a transceiver module.

The transceiver module is configured to send or receive first information. The first information is used for determining transmission characteristic information corresponding to a first information transmission group between the first device for information transmission and a second device for information transmission. The first information transmission group includes at least two information transmissions.

According to another aspect of the embodiments of the present disclosure, there is provided a communication device. The communication device includes a processor, a transceiver and a memory.

The processor is connected to the transceiver. The memory is configured to store executable instructions of the processor.

The processor is configured to load and execute the executable instructions to implement the method for information transmission in the aforementioned various aspects.

According to another aspect of the embodiments of the present disclosure, there is provided a chip. The chip includes a programmable logic circuitry and/or program instructions for implementing the method for information transmission in the aforementioned various aspects when the chip is running.

According to another aspect of the embodiments of the present disclosure, there is provided a computer-readable storage medium. The computer-readable storage medium stores at least one program, and the at least one program is loaded and executed by a processor to implement the method for information transmission in the aforementioned various aspects

According to another aspect of the embodiments of the present disclosure, there is provided a computer program product or a computer program. The computer program product or the computer program includes computer instructions stored in a computer-readable storage medium, a processor acquires the computer instructions from the computer-readable storage medium, and the processor executes the computer instructions to implement the method for information transmission in the aforementioned various aspects.

The technical solution provided by the embodiments of the present disclosure may include following beneficial effects.

The first information is sent or received. The first information is used for determining the transmission characteristic information corresponding to the first information transmission group between the first communication device and the second communication device. The first information transmission group includes the at least two information transmissions. Through the communication device determining the transmission characteristic information in advance, signaling overhead can be saved during the information transmission and transmission efficiency of the communication system is improved.

### BRIEF DESCRIPTION OF THE DRAWINGS

In order to explain more clearly technical solutions of the embodiments of the present disclosure, desirable accompanying drawings in the description of the embodiments will be introduced simply below. Obviously, the drawings in the below description are only used for some embodiments of the present disclosure, and other drawings of the embodiments may be acquired based on these drawings by those skilled in the art without creative efforts.
FIG. 1 illustrates a schematic diagram of a communication system according to an exemplary embodiment of the present disclosure.
FIG. 2 illustrates a schematic diagram of information transmission according to an exemplary embodiment of the present disclosure.
FIG. 3 is a flowchart of a method for information transmission according to an exemplary embodiment of the present disclosure.
FIG. 4 illustrates a schematic diagram of a format of sub-information of first information according to an exemplary embodiment of the present disclosure.
FIG. 5 illustrates a schematic diagram of a format of sub-information of first information according to an exemplary embodiment of the present disclosure.
FIG. 6 illustrates a block diagram of a first device for information transmission according to an exemplary embodiment of the present disclosure.
FIG. 7 illustrates a schematic structural diagram of a communication system according to an exemplary embodiment of the present disclosure.

### DETAILED DESCRIPTION

In order to make the objectives, technical solutions and advantages of the present disclosure clearer, implementations of the present disclosure will be described in further detail below in combination with the accompanying drawings. Herein, exemplary embodiments will be described in detail, examples of which are illustrated in the accompanying drawings. The following description refers to the accompanying drawings in which the same reference numbers in different drawings represent the same or similar elements unless otherwise represent. The implementations set forth in the following description of exemplary embodiments do not represent all implementations consistent with the represent disclosure. Instead, they are merely examples of apparatuses and methods consistent with aspects related to the invention as recited in the appended claims.

The terms used in the disclosure is only for the purpose of describing the particular embodiments, and is not intended to limit the present disclosure. As used in the disclosure and the appended claims, the singular forms "a", "said" and "the" are also intended to include the plural forms unless the context clearly indicates otherwise. It is also to be understood that the term "and/or" used herein, refers to and encompasses any or all possible combinations of one or more associated listed items.

It is to be understood that while the terms first, second, third, etc., may be used in the present disclosure to describe various information, such information should not be limited to such terms. These terms are used only to distinguish the same type of information from one another. For example, the first information may also be referred to as second information without departing from the scope of the present disclosure, and similarly, the second information may also be referred to as the first information. Depending on the context, as used herein, the phrase "if" may be interpreted as "in a case where", "when" or "in response to determining".

The technical solutions described in some embodiments of the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolved system of the NR system, an LTE-based access to unlicensed spectrum (LTE-U) system, a NR-based access to unlicensed spectrum (NR-U) system, a Non-Terrestrial Networks (NTN) system, an Universal Mobile Telecommunication System (UMTS), a Wireless Local Area Network (WLAN), a Wireless Fidelity (WiFi), the 5th-Generation Communication (5G) system, a cellular Internet of Things (IoT) system and a cellular passive IoT system; may also be applied to the subsequent evolved systems of the 5G NR system, and may also be applied to 6G and subsequent evolved systems.

It is to be understood that in some embodiments of the present disclosure, "5G" may also be referred to as "5G NR" or "NR".

It is to be understood that in the description of the embodiments of the present disclosure, the term "correspond" may represent that there is a direct correspondence or an indirect correspondence between the two, may also represent that there is an association relationship between the two, and may also be a relationship between indication and being indicated, configuration and being configured, etc.

In the embodiments of the present disclosure, the term "predefined" may be achieved by pre-storing corresponding codes, tables or other means used for indicating relevant information in devices (e.g., including the terminal devices and the network devices), and the specific implementation thereof is not limited in the present disclosure. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

**Hereinafter, transmission manners for downlink data are introduced.**

The communication system includes a terminal device and a network device. Taking the terminal device as User Equipment (UE) and the network device as a base station as an example, the communication system usually supports following two transmission manners of downlink data.
(1) The UE receives downlink control signaling sent by the base station and receives downlink data transmission based on parameters in the downlink control signaling. This scheduling manner is referred to as a dynamic scheduling. The advantage of the dynamic scheduling is that the transmission parameters may be determined according to a real-time traffic amount and a physical channel condition, which has high transmission efficiency. The UE firstly receives the downlink control signaling, and receives a downlink data channel or sends an uplink data channel based on the parameters indicated in the downlink control signaling. However, the UE needs to perform a blind detection on the downlink control signaling, which has a high reception complexity. In addition, a processing delay of the receiving end (UE) includes two parts: demodulating the downlink control signaling and demodulating the downlink data. In the case where there are multiple pieces of the downlink control signaling and downlink data, the processing delay of the receiving end is high.
(2) The UE receives higher layer signaling sent by the base station, and receives the downlink data transmission based on parameters in the higher layer signaling. It is referred to as the Semi-Persistent Scheduling (SPS) in the LTE and NR systems. For the data arriving periodically and having constant traffic amount and the UE having a stable transmission condition (e.g., not moving quickly), using the semi-persistent scheduling can reduce overhead of the downlink control signaling in the system and simplify the reception processing of the receiving end (UE).

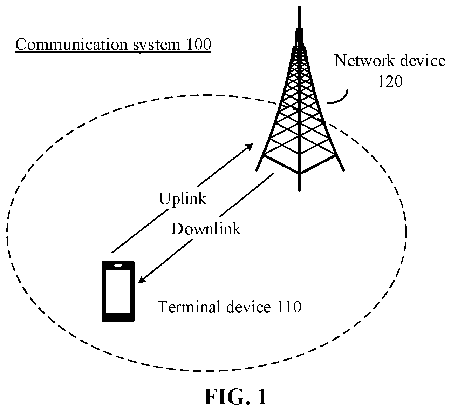

FIG. 1 is a schematic structural diagram of a communication system 100 according to an embodiment of the present disclosure. The communication system 100 includes a first communication device and a second communication device.

In some embodiments, the first communication device is a terminal device 110, and the second communication device is a network device 120. Alternatively, the first communication device is the network device 120 and the second communication device is the terminal device 110, which is not limited in the embodiments of the present disclosure. The first communication device being the terminal device 110 and the second communication device being the network device 120 is taken as an example to describe.

The terminal device 110 in the present disclosure may be referred to as the UE, an access terminal, a user unit, a user station, a mobile station, a mobile platform, a remote station, a remote terminal, a mobile device, a user terminal, a terminal, a wireless communication device, a user agent, or user apparatus. The terminal includes, but is not limited to, a handheld device, a wearable device, a vehicle-mounted device, an IoT device, or the like, such as, a mobile phone, a tablet computer, an e-book reader, a laptop computer, a desktop computer, a television, a game console, a Mobile Internet Device (MID), an Augmented Reality (AR) terminal, a Virtual Reality (VR) terminal, and a Mixed Reality (MR) terminal, a wearable device, a handle, an electronic tag, a controller, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, a wireless terminal in remote medical surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE), etc.

The network device 120 in the present disclosure provides a wireless communication function. The network device 120 includes, but is not limited to: an Evolved Node B (eNB), a Radio Network Controller (RNC), a Node B (NB), a Base Station Controller (BSC), a Base Transceiver Station (BTS), a home base station (e.g., a Home Evolved Node B, or a Home Node B (HNB)), a BaseBand Unit (BBU), an Access Point (AP), a wireless relaynode, a wireless backhaul node, a Transmission Point (TP) or a Transmission and Reception Point (TRPi) in the Wi-Fi system, or the like; may also be a Next Generation Node B (gNB) or a Transmission Point (TRP or TP) in the 5G mobile communication system; or may be one or a group of antenna panels (including multiple antenna panels) of a base station in the 5G system; or may also be a network node constituting the gNB or a transmission point, such as a BaseBand Unit (BBU) or a Distributed Unit (DU), or the like; or may be a base station in a B5G mobile communication system or a 6G mobile communication system; or may be a Core Network (CN), Fronthaul, Backhaul, Radio Access Network (RAN), Network slice, or the like; or may be a serving cell, a Primary Cell (PCell), a Primary Secondary Cell (PSCell), or a Special Cell (SpCell), a Secondary Cell (Scell), a neighboring cell, etc.

The terminal device 110 communicates with the network device 120 through a certain air interface technology, such as, the Uu interface.

Exemplarily, there are two communication scenarios between the terminal device 110 and the network device 120: an uplink communication scenario and a downlink communication scenario. The uplink communication means that the terminal device 110 sends a signal to the network device 120. The downlink communication means that the network device 120 sends a signal to the terminal device 110.

The technical solution provided by the embodiments of the present disclosure may be applied to various communication systems, such as, a GSM system, a CDMA system, a WCDMA system, a GPRS, a LTE system, a LTE-A system, a LTE Frequency Division Duplex (FDD) system, a LTE TDD system, an UMTS, a Worldwide Interoperability for Microwave Access (WiMAX) communication system, a 5G mobile communication system, a NR system, an evolved system of the NR system, a LTE-U system, a NR-U system, a NTN system, a non-NTN system, a WLAN, a Wi-Fi, a cellular IoT system, a cellular passive IoT system; and may also be applied to subsequent evolved system of the 5G NR system, and may also be applied to the B5G, the 6G and subsequent evolved system.

In some embodiments of the present disclosure, the "NR" may also be referred to as the "5G NR" or the "5G". Herein, the 5G mobile communication system may include a Non-Standalone (NSA) network and/or a Standalone (SA) network.

The technical solution provided by the embodiments of the present disclosure may also be applied to the Machine Type Communication (MTC), a Long Term Evolution-Machine (LTE-M), a Device to Device (D2D) network, a Machine to Machine (M2M) network, an IoT network, or other networks. The IoT network may include, for example, an Internet of Vehicles. The communication manners in the Internet of Vehicles system are collectively referred to as Vehicle to X (V2X) (X represents anything). For example, the V2X includes: a Vehicle to Vehicle (V2V) communication, a Vehicle to Infrastructure (V2I) communication, a Vehicle to Pedestrian (V2P) communication, a Vehicle to Network (V2N) communication, etc.

With the continuous development of the communication technology, in some communication scenarios, the information transmission between the communication devices has agreed transmission characteristic information, such as, the data arrival time, the data volume, the data transmission direction, the data type and other transmission characteristic information.

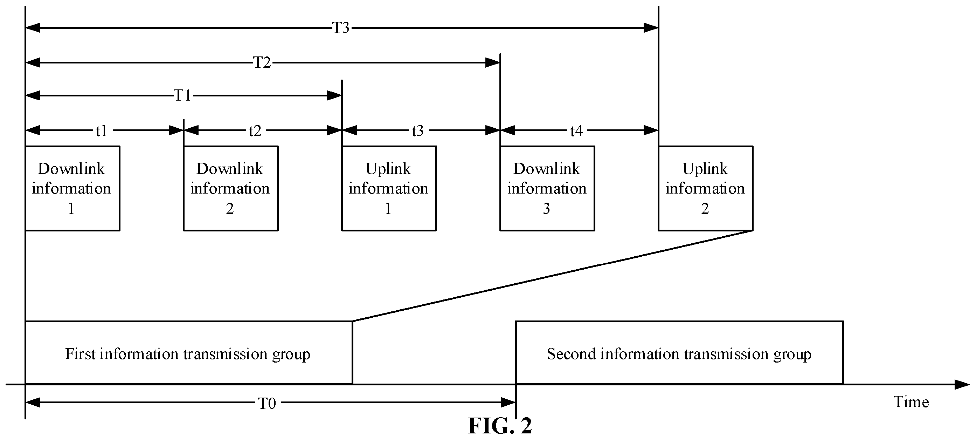

FIG. 2 illustrates a schematic diagram of information transmission according to an exemplary embodiment of the present disclosure. One data transmission service includes multiple groups of information transmissions between the receiving end (the terminal device) and the sending end (the network device), for example, a first information transmission group and a second information transmission group. Each information transmission group includes multiple information transmissions. Taking the first information transmission group as an example, downlink information 1, downlink information 2 and downlink information 3 represent information received by the terminal device that is sent by the network device. Different pieces of downlink information have different or the same information types or information contents. The uplink information 1 and the uplink information 2 represent the information sent by the terminal device to the network device. Different pieces of uplink information have different or the same information types or information contents.

A time interval between a starting point of the first information transmission group and a starting point of the second information transmission group is T0. A time interval between a starting point of the downlink information 1 and a starting point of the downlink information 2 is t1. A time interval between a starting point of the downlink information 2 and a starting point of the uplink information 1 is t2. A time interval between a starting point of the uplink information 1 and a starting point of the downlink information 3 is t3. A time interval between a starting point of the downlink information 3 and a starting point of the uplink information 2 is t4. A time interval between a starting point of the uplink information 1 and a starting point of the downlink information 1 is T1. A time interval between a starting point of the downlink information 3 and a starting point of the downlink information 1 is T2. A time interval between a starting point of the uplink information 2 and a starting point of the downlink information 1 is T3.

In some communication scenarios, communications between the network device and the terminal device occur one group by one group, and there may be periodicity between the groups or these groups may be completely random. The transmission characteristics between the groups have similarity, but carried effective information contents are different. That is to say, the information transmissions of different groups are not the repetition of the same information content.

If the communication device is able to acquire the related transmission characteristic information of the information transmission, the subsequent transceiving operation may be performed according to the related transmission characteristic information after the data transmission service is initiated. That is to say, the subsequent transceiving operation may be performed only based on a small amount of scheduling signaling or without additional scheduling signaling. In addition, a relatively definite configuration may be adopted for the transmission of a small amount of the scheduling signaling, thereby reducing or avoiding the case of the blind detection. This is beneficial to reducing the signaling overhead in the communication system, improving the transmission efficiency of the communication system, and is also beneficial to reducing implementation complexity of the communication device and reducing the power consumption of the communication device.

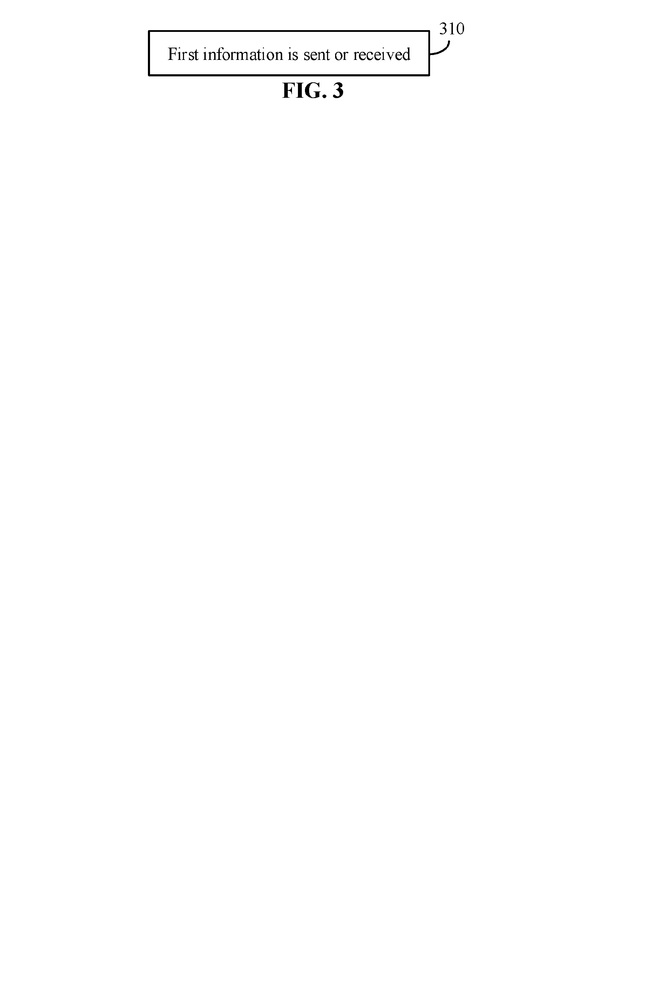

FIG. 3 is a flowchart of a method for information transmission according to an exemplary embodiment of the present disclosure. The method is performed by a first communication device, and the method includes following operation 310.

In operation 310, first information is sent or received.

The first information is used for determining transmission characteristic information corresponding to a first information transmission group between the first communication device and a second communication device. The first information transmission group includes at least two information transmissions.

In some embodiments, the first information is used for determining transmission characteristic information corresponding to at least one information transmission group between the first communication device and the second communication device. Each of the at least one information transmission group includes at least two information transmissions.

In some embodiments, the first information is used for determining transmission characteristic information corresponding to at least one group of information transmissions between the first communication device and the second communication device. Each of the at least one group of information transmissions includes at least two information transmissions.

In some embodiments, the first information transmission group has periodicity or does not have periodicity.

As shown in FIG. 2, information related to the first information transmission group includes: the downlink information 1, the downlink information 2, the downlink information 3, the uplink information 1, and the uplink information 2. The occurrence of the information transmissions may have the periodicity. For example, the time interval between the starting point of the first information transmission group and the starting point of the second information transmission group is T0, i.e. the occurrence period of the information transmissions is T0. The occurrence of information transmissions may do not have the periodicity, i.e., the occurrence of different groups of information transmissions are random.

Through binding at least two information transmissions into one group of information transmissions, it is convenient for the communication device to acquire the transmission characteristic information of the related multiple information transmissions.

In some embodiments, in the case where the occurrence of the group of information transmissions has the periodicity, the first communication device sends a first parameter to the second communication device. The first parameter is used for indicating a period of the occurrence of the group of information transmissions. For example, the time interval T0 between the starting point of the first information transmission group and the starting point of the second information transmission group in FIG. 2 is the period of the occurrence of information transmission indicated by the first parameter.

In some embodiments, the first communication device is a terminal device, and the second communication device is a network device.

Alternatively, the first communication device is a network device, and the second communication device is a terminal device.

In the case where the first communication device is the terminal device and the second communication device is the network device, the terminal device reports the first information to the network device. For example, the terminal reports the first information to the base station. In the case where the first communication device is the network device and the second communication device is the terminal device, the network device sends the first information to the terminal. For example, the base station sends the first information to the terminal.

In some embodiments, the transmission characteristic information includes at least one of:

time information of one of the at least two information transmissions; a type of information transmitted in one of the at least two information transmissions; a content of information transmitted in one of the at least two information transmissions; a format of information transmitted in one of the at least two information transmissions; a transmission channel for one of the at least two information transmissions; information amount related information transmitted in one of the at least two information transmissions; a reliability requirement of one of the at least two information transmissions; or a delay requirement of one of the at least two information transmissions.

Through indicating the transmission characteristic information, a specific characteristic of one of the at least two information transmissions is represented.

In some embodiments, the first information includes at least one piece of sub-information, and the number of the at least one piece of sub-information is less than or equal to the number of the at least two information transmissions. A single piece of sub-information among the at least one piece of sub-information is used for determining transmission characteristic information of at least one of the at least two information transmissions. It may also be understood as: the correspondence between the at least one piece of sub-information and the at least two information transmissions is one-to-one or one-to-many.

In some embodiments, the single piece of sub-information among the at least one piece of sub-information is used for determining one kind of transmission characteristic information of one of the at least two information transmissions.

In some embodiments, the single piece of sub-information among the at least one piece of sub-information is used for determining multiple kinds or all of transmission characteristic information of one of the at least two information transmissions.

In some embodiments, the single piece of sub-information among the at least one piece of sub-information is used for determining the same transmission characteristic information of multiple information transmissions among the at least two information transmissions.

In some embodiments, the single piece of sub-information among the at least one piece of sub-information is used for determining multiple kinds of or all of transmission characteristic information of multiple information transmissions among the at least two information transmissions.

In some embodiments, the multiple information transmissions are consecutive multiple information transmissions with the same type. Alternatively, the multiple information transmissions are multiple information transmissions that have an association. Alternatively, the multiple information transmissions are all information transmissions in one information transmission group.

Exemplarily, the at least two information transmissions are N information transmissions, where N is greater than or equal to 2. The first information includes M pieces of sub-information, where M is less than or equal to N. A single piece of sub-information among the M pieces of sub-information is used for determining one kind of transmission characteristic information of one of the N information transmissions, for example, for determining the information type of the downlink information 1 shown in FIG. 2. Alternatively, the single piece of sub-information among the M pieces of sub-information is used for determining multiple kinds of transmission characteristic information of one of the N information transmissions, for example, for determining the information type and information content of the downlink information 2 shown in FIG. 2. The number and the specific type of the determined transmission characteristic information are not limited in the embodiments of the present disclosure.

In some embodiments, the single piece of sub-information is used for carrying at least one of following information.

Number index information of the single piece of sub-information; time information of at least one of the at least two information transmissions; a type of information transmitted in at least one of the at least two information transmissions; a content of information transmitted in at least one of the at least two information transmissions; a format of information transmitted in at least one of the at least two information transmissions; a transmission channel for at least one of the at least two information transmissions; information amount related information transmitted in at least one of the at least two information transmissions; a reliability requirement of at least one of the at least two information transmissions; or a delay requirement of at least one information transmission of the at least two information transmissions.

In some embodiments, the first information includes at least one piece of sub-information, and the number of the at least one piece of sub-information is less than or equal to the number of types of the transmission characteristic information. A single piece of sub-information among the at least one piece of sub-information is used for determining one kind of transmission characteristic information in the at least two information transmissions.

Exemplarily, the number of types of the transmission characteristic information is P, where P is greater than or equal to 1. The first information includes M pieces of sub-information, where M is less than or equal to P. A single sub-information among the M pieces of sub-information is used for one kind of transmission characteristic information in at least two information transmissions, for example, for determining information types of all information in the first information transmission group, or for determining information contents of all information in the first information transmission group. The specific type of the determined transmission characteristic information is not limited in the embodiments of the present disclosure.

In some embodiments, the single piece of sub-information is used for carrying at least one of following information.

Number index information of the single piece of sub-information; a number of information transmissions; time information of the at least two information transmissions; types of information transmitted in the at least two information transmissions; contents of information transmitted in the at least two information transmissions; formats of information transmitted in the at least two information transmissions; transmission channels for the at least two information transmissions; information amount related information transmitted in the at least two information transmissions; reliability requirements of the at least two information transmissions; or delay requirements of the at least two information transmissions.

**The time information**.

In some embodiments, the time information of one of the at least two information transmissions is represented through an absolute time length or a number of time units.

The time unit includes at least one of: a frame, a subframe, a slot, a sub-slot, and a time-domain symbol. For example, t1 in FIG. 2 may be represented through n slots, where n is a positive integer.

The time information being represented through the absolute time length is easy to understand and has the uniform. The time information being represented through the number of time units is more flexible and convenient to calculate.

In some embodiments, different subcarrier spacing is used for the at least two information transmissions, and the time units include at least one of:
time units corresponding to a subcarrier spacing used by a first one of the at least two information transmissions; time units corresponding to a subcarrier spacing used by a first one of two adjacent information transmissions among the at least two information transmissions; time units corresponding to a subcarrier spacing used by a second one of the two adjacent information transmissions among the at least two information transmissions; time units corresponding to a subcarrier spacing used by a first one of two associated information transmissions among the at least two information transmissions; time units corresponding to a subcarrier spacing used by a second one of the two associated information transmissions among the at least two information transmissions; time units corresponding to a subcarrier spacing used by a first one downlink information transmission among the at least two information transmissions; time units corresponding to a subcarrier spacing used by a first one uplink information transmission among the at least two information transmissions; or time units corresponding to a reference subcarrier spacing pre-configured by a network device.

Herein, the two adjacent information transmissions represent two information transmissions that are adjacent in the time position, for example, the downlink information 1 and the downlink information 2 in FIG. 2. The association includes at least one of a relationship of scheduling and being scheduled or a relationship of request and response. In a case where the two associated information transmissions represent the information transmission corresponding to the control signaling and the information transmission corresponding to data scheduled by the control signaling, for example, in a case where the downlink information 1 is Downlink Control Information (DCI) and the downlink information 3 is downlink data scheduled by the DCI, the information transmission corresponding to the downlink information 1 and the information transmission corresponding to the downlink information 3 are the two associated information transmissions.

Exemplarily, as shown in FIG. 2, the information transmission corresponding to the downlink information 1 represents the first one of at least two information transmissions.

The downlink information 1 and the downlink information 2 being the two adjacent information transmissions is taken as an example, the information transmission corresponding to the downlink information 1 represents the first one of the two adjacent information transmissions among the at least two information transmissions, and the information transmission corresponding to the downlink information 2 represents the second one of the two adjacent information transmissions among the at least two information transmissions.

The downlink information 1 and the downlink information 3 being the two associated information transmissions is taken as an example, the information transmission corresponding to the downlink information 1 represents the first one of the two associated information transmissions among the at least two information transmissions, and the information transmission corresponding to the downlink information 3 represents the second one of the two associated information transmissions among the at least two information transmissions.

The information transmission corresponding to the downlink information 1 is the first one downlink transmission among the at least two information transmissions. The information transmission corresponding to the uplink information 1 is the first one uplink information transmission among the at least two information transmissions.

The time units with different types may be used for different application scenarios. For example, in a case where it is necessary to unify the time units, the time units corresponding to a subcarrier spacing used by the first one of the at least two information transmissions may be used; and in a case where it is necessary to simplify the calculation, the time units corresponding to a subcarrier spacing used by the first one of two adjacent information transmissions among the at least two information transmissions may be used.

In some embodiments, the value of the time information is a first value.

In some embodiments, the first value is a value in a first value set, or the first value is a value within a first value range.

In some embodiments, the first information includes the first value set, or the first information includes the first value range.

Taking t1 in FIG. 2 as an example, t1 may be the first value. For example, t1 may be represented through n slots, where n is a positive integer. The t1 may also be a value in the first value set, for example, a value in {a1, a2, a3...}. A value in the first value set is represented by the absolute time length or the number of time units. The t1 may also be a value within the first value range. For example, t1 is a value in [A, B], where both A and B are greater than 0.

In some embodiments, the time information includes at least one of:
a time interval or a time offset between the one information transmission and an adjacent previous information transmission; a time interval or a time offset between the one information transmission and an adjacent subsequent information transmission; a time interval or a time offset between the one information transmission and a first one of the at least two information transmissions; a time interval or a time offset between the one information transmission and a last one of the at least two information transmissions.

In FIG. 2, the information transmission corresponding to the downlink information 1 is the first one of the at least two information transmissions. Taking the one information transmission being the information transmission corresponding to the uplink information 1 as an example, a time interval or a time offset between the information transmission corresponding to the uplink information 1 and the information transmission corresponding to the downlink information 2 represents the time interval or the time offset between the one information transmission and the adjacent previous information transmission.

A time interval or a time offset between the information transmission corresponding to the uplink information 1 and the information transmission corresponding to the downlink information 3 represents the time interval or the time offset between the one information transmission and the adjacent subsequent information transmission.

A time interval or a time offset between the information transmission corresponding to the uplink information 1 and the information transmission corresponding to the downlink information 1 represents the time interval or the time offset between the one information transmission and the first one of the at least two information transmissions.

A time interval or a time offset between the information transmission corresponding to the uplink information 1 and the information transmission corresponding to the uplink information 2 represents the time interval or the time offset between the one information transmission and the last one of the at least two information transmissions.

The time intervals or time offsets with different types may be used for different application scenarios. For example, in a case where the simplified representation is required, the time interval or the time offset between the one information transmission and the adjacent previous information transmission may be used; in a case where a uniform representation is required and the time interval or the time offset between the one information transmission and the first one information transmission is small, the time interval or the time offset between the one information transmission and the first one of the at least two information transmissions may be used.

An agreed time relationship between multiple information transmissions is present, which is beneficial to reducing the overhead of the control signaling. After the time resources for the first one information transmission are determined, the time-domain resources (the time-domain starting resource) of the subsequent information transmission are determined successively, and are not required to be indicated by the physical layer signaling. Alternatively, the time-domain resources (the time-domain starting resource) of the subsequent transmission may be limited to be located within a small time range, and the indication range of the physical layer signaling can be narrowed, thereby reducing the signaling overhead; or the communication device only needs to detect the physical layer signaling within a small range, which is also beneficial to reducing the power consumption of the communication device.

**The type of information.**

In some embodiments, the type of information includes at least one of:
downlink information; uplink information; downlink synchronization information; broadcast information; multicast information; unicast information; terminal-specific downlink information; downlink control information; downlink data information; uplink synchronization information; terminal-specific uplink information; uplink control information; uplink data information; or a reference signal.

In some embodiments, the type of information transmitted in the one of the at least two information transmissions is used for determining a physical channel used by the one information transmission. A correspondence between the type of information and the physical channel includes at least one of the followings.

The downlink information corresponds to a downlink channel; the uplink information corresponds to an uplink channel; the downlink synchronization information corresponds to a downlink synchronization channel; the broadcast information corresponds to a broadcast channel; the multicast information corresponds to a multicast channel; the unicast information corresponds to a unicast channel; the terminal-specific downlink information corresponds to a terminal-specific channel; the downlink control information corresponds to a downlink control channel; the downlink data information corresponds to a downlink shared channel; the uplink synchronization information corresponds to an uplink synchronization channel; the terminal-specific uplink information corresponds to the terminal-specific channel; the uplink control information corresponds to an uplink control channel; or the uplink data information corresponds to an uplink shared channel. The reference signal does not correspond to a physical channel and the transmission of the reference signal is directly performed.

Through indicating the type of information and the corresponding physical channel, the type of information and the physical channel corresponding to the type of information that may be determined by the first information are represented, which is helpful for the receiving end to correctly parse and process the received information, and avoid confusing information with different types.

In some embodiments, the type of information includes at least one of: configuration information; grant information; allocation information; downlink control signaling; physical layer control signaling; higher layer signaling; Radio Resource Control (RRC) signaling; Media Access Control (MAC) signaling; uplink control signaling; feedback acknowledgement information; channel state information; a Scheduling Request (SR); Buffer Status Report (BSR); or uplink channel demodulation assistance information.

In the case where the type of information includes the configuration information, it is used for configuring various parameters and attributes of a communication device.

In the case where the type of information includes the grant information, it is used for granting the communication device to perform the data transmission on a specified time and frequency band.

In the case where the type of information includes the allocation information, it is used for allocating radio resources or time resources to the communication device.

In the case where the type of information includes the downlink control signaling, it is used for sending the control information of the downlink data transmission to the communication device.

In the case where the type of information includes the physical layer control signaling, it is used for performing the transmission of the signaling for controlling the transmission on the physical layer.

In the case where the type of information includes the higher layer signaling, it is used for performing the transmission of the signaling used in a higher layer protocol. The higher layer refers to a layer above the physical layer.

In the case where the type of information includes the RRC signaling, it is used for controlling access, handover, movement, connection state, etc. of the communication device.

In the case where the type of information includes the MAC signaling, it is used for performing the access control on a medium in the wireless network, including resource allocation, scheduling, transmission control, and the like.

In the case where the type of information includes the UCI, it is used for sending the control information of the uplink data transmission to the communication device.

In the case where the type of information includes the feedback acknowledgement information, it is used for representing an acknowledgement or a negative acknowledgement for the received data.

In the case where the type of information includes the channel state information, it is used for representing state information of the uplink channel and the downlink channel.

In the case where the type of information includes the SR, it is used for requesting the allocation of downlink resources, so as to meet the transmission requirement for the downlink data.

In the case where the type of information includes the BSR, it is used for indicating the data volume buffered by the communication device and the related state.

In the case where the type of information includes the uplink channel demodulation assistance information, it is used for indicating assistance information in the uplink transmission, so as to assist the communication device to perform the channel demodulation and data transmission.

In some embodiments, the feedback acknowledgement information includes at least one of: an ACKnowledgment (ACK) or a Negative-ACKnowledgment (NACK).

In some embodiments, the channel state information includes at least one of: Channel-State Information (CSI), a Channel Quality Indicator (CQI), a Procoding Matrix Indicator (PMI), or a Rank Indicator (RI).

### The content of information.

In some embodiments, the content of information includes uplink data and/or downlink data.

In some embodiments, uplink data and/or downlink data includes at least one of: a data packet; a Transport Block (TB); or a Protocol Data Unit (PDU).

In some embodiments, the content of information includes an uplink synchronization signal and/or a downlink synchronization signal.

In some embodiments, the uplink synchronization signal and/or the downlink synchronization signal includes at least one of: a Synchronization Signal Block (SSB); a Physical Random Access Channel (PRACH); a Primary Synchronization Signal (PSS); or a Secondary Synchronization Signal (SSS).

In some embodiments, the content of information includes an uplink reference signal and/or a downlink reference signal.

In some embodiments, the uplink reference signal and/or the downlink reference signal includes at least one of: a DeModulation Reference Signal (DMRS); a Channel State Information Reference Signal (CSI-RS); a Sounding Reference Signal (SRS); or a Phase Tracking Reference Signal (PTRS).

Through indicating the content of information, the specific content of information transmitted in one information transmission that can be determined by the first information is represented, which is helpful to ensure the accuracy and integrity of the information.

**The transmission channel.**

In some embodiments, the transmission channel includes at least one of:
a downlink channel; a downlink synchronization channel; a broadcast channel; a multicast channel; a unicast channel; a terminal-specific channel; a downlink control channel; a downlink shared channel; an uplink channel; an uplink synchronization channel; an uplink control channel; or an uplink shared channel.

In some embodiments, the correspondence between the type of information and the physical channel includes at least one of the followings.

The downlink information corresponds to a downlink channel; the uplink information corresponds to an uplink channel; the downlink synchronization information corresponds to a downlink synchronization channel; the broadcast information corresponds to a broadcast channel; the multicast information corresponds to a multicast channel; the unicast information corresponds to a unicast channel; the terminal-specific downlink information corresponds to a terminal-specific channel; the downlink control information corresponds to a downlink control channel; the downlink data information corresponds to a downlink shared channel; the uplink synchronization information corresponds to an uplink synchronization channel; the terminal-specific uplink information corresponds to the terminal-specific channel; the uplink control information corresponds to an uplink control channel; or the uplink data information corresponds to an uplink shared channel.

Through indicating the transmission channel, it is helpful to make rational use of the wireless resources, meet the requirements of different channels for the transmission information, and improve the transmission efficiency.

**The information amount related information.**

In some embodiments, the information amount related information includes at least one of: information for indicating information volume; information for determining the information amount; or a sequence length of a first sequence.

The first sequence is a sequence used for generating a reference signal or a synchronization signal. In the case where the content of information is the reference signal or the synchronization signal, the information amount related information is the sequence length.

In some embodiments, the information for indicating the information amount includes at least one of: a value of the information amount; statistical information of the information amount; a value of an information amount level; or an interval of the information amount level. The information amount level is used for indicating a value range of the information amount.

The information amount related information may be used for directly indicating the information amount, including: a value of the information amount, for example, X bits, where X is a positive integer;
or, the statistical information of the information amount, for example, an average of the information amount, a variance of the information amount, a probability distribution of the information amount, and the like;
or, the information amount level, and different information amount levels correspond to different information amount value ranges, for example, the first level of the information amount level corresponds to 0 bits to 10 bits, and the second level of the information amount level corresponds to 11 bits to 20 bits;
or, an interval of the information amount level, for example, the first level to the fifth level of the information amount level.

In some embodiments, the information for determining the information amount includes at least one of: the information format; or an algorithm used for calculating the information amount.

In some embodiments, the format of information includes at least one of: a DCI format; or an UCI format.

For the uplink control signaling and the downlink control signaling, the format of information may be indicated, and different formats of information carry different information contents (information fields). All information contents (information fields) and/or the number of bits included in the control signaling may be acquired through the format of information.

In some embodiments, the information amount is represented by a Transport Block Size (TBS). In order to obtain the value of the TBS, the calculation may be performed in the following manner.

The data channel, such as a Physical Downlink Shared Channel (PDSCH) and a Physical Uplink Shared Channel (PUSCH), performs the data transmission in units of Transport Blocks (TB). The determination of the TBS in the data channel may be divided into the following three operations. Taking the PDSCH as an example, the determination operation of the transport block size includes following three operations.
1) The number *N_{RE}* of Resource Elements (RE) of the PDSCH is determined, which includes following two operations.
   i. The number ${N}_{RE}^{′}$ of REs in one Physical Resource Block (PRB) is determined, and the calculation formula is: ${N}_{RE}^{′} = {N}_{sc}^{RB} \times {N}_{symb}^{sh} - {N}_{DMRS}^{PRB} - {N}_{oh}^{PRB} ;$
      where ${N}_{sc}^{RB} = 12$, it represents the number of subcarriers in one Resource Block (RB); ${N}_{symb}^{sh}$ is the number of symbols occupied by the PDSCH in one slot; ${N}_{DMRS}^{PRB}$ is the number of REs occupied by the DMRS within one PRB; and ${N}_{oh}^{PRB}$ is the number of overhead REs configured within one PRB. The number of the overhead REs includes: the number of REs occupied by the control signaling, such as, a synchronization channel, a Physical Broadcast CHannel (PBCH), a PDCCH, and a Physical Uplink Control CHannel (PUCCH).
   ii. The number *N_{RE}* of REs in the PDSCH is determined, and the calculation formula is: ${N}_{RE} = min \left(156, {N}_{RE}^{′}\right) \times {n}_{PRB} ;$
      where *n_{PRB}* is the number of PRBs allocated by the network device to the terminal device.
2) The intermediate information amount *N_{info}* carried by the PDSCH is calculated, and the calculation formula is: ${N}_{info} = {N}_{RE} \times R \times {Q}_{m} \times υ ;$
   where *N_{RE}* is the calculated number of REs in the PDSCH, R is the bit rate of the data transmission on the PDSCH, *Qₘ* is the modulation order of the data on the PDSCH, and *υ* represents the number of transmission layers of the PDSCH.
3) The TBS is determined based on the intermediate information amount *N_{info}.*
   i. If *N_{info}*≤3824, the transport block size is determined through a manner of quantizing and looking up in a table.
   ii. If *N_{info}*>3824, the transport block size is determined through a manner of quantization calculation.

Through indicating the information amount information and through the different representation manners of the information amount information, the information amount information can be flexibly adjusted according to actual requirements.

**The reliability requirement.**

In some embodiments, the reliability requirement includes at least one of: data integrity, data accuracy or data reliability.

The data integrity represents that it is required to ensure that no data loss or damage occurs in the information transmission. The data accuracy represents that it is required to ensure that the transmitted information is consistent with the original information without the error or distortion. The data reliability represents that it is required to ensure that the transmitted data can be received and processed correctly on the target device without data loss or out-of-order due to the network problem.

**The delay requirement.**

In some embodiments, the delay requirement includes at least one of: real-time, delay stability, or a maximum delay requirement.

The real-time represents that the delay of the information transmission is required to be very short. For example, application scenarios such as the video conference and the online game have high real-time requirement. The delay stability represents that the transmission delay of the information is required to have the stability, and no abnormal data transmission occurs due to the network fluctuation or congestion. The maximum delay requirement represents the longest allowable delay of the information transmission.

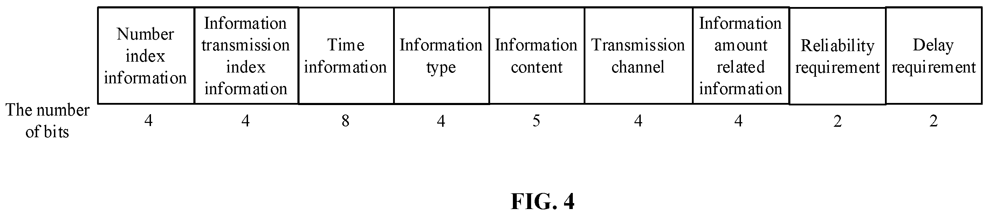

FIG. 4 illustrates a schematic diagram of a format of sub-information of first information according to an exemplary embodiment of the present disclosure. The sub-information of the first information includes at least one of: a number index information field, an information transmission index information field, a time information field, an information type field, an information content field, a transmission channel field, an information amount related information field, a reliability requirement field, or a delay requirement field.

The number index information field occupies 4 bits, the information transmission index information field occupies 4 bits, the time information field occupies 8 bits, the information type field occupies 4 bits, the information content field occupies 5 bits, the transmission channel field occupies 4 bits, the information amount related information field occupies 4 bits, the reliability requirement field occupies 2 bits, and the delay requirement field occupies 2 bits.

The number index information field is used for indicating the number of the sub-information. The information transmission index information field is used for indicating that the one information transmission is which one in a group of information transmissions. The time information field is used for indicating the time information of the one information transmission. The information type field is used for indicating the type of the information transmitted in the one information transmission. The information content field is used for indicating the content of the information transmitted in the one information transmission. The transmission channel field is used for indicating a transmission channel for the one information transmission. The information amount related information field is used for indicating the information amount related information transmitted in the one information transmission. The reliability requirement field is used for indicating the reliability requirement of the one information transmission. The delay requirement field is used for indicating the delay requirement of the one information transmission. The one information transmission in the sub-information represents the same one information transmission, for example, the i-th one information transmission, where i is a positive integer.

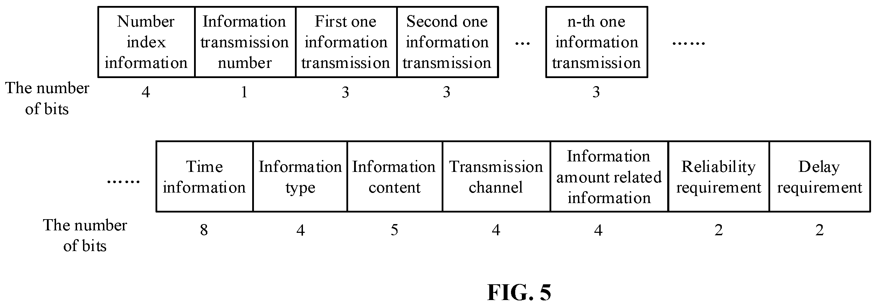

FIG. 5 illustrates a schematic diagram of a format of sub-information of first information according to an exemplary embodiment of the present disclosure. The sub-information of the first information includes at least one of: a number index information field, an information transmission number field, n information transmission fields, a time information field, an information type field, an information content field, a transmission channel field, an information amount related information field, a reliability requirement field, or a delay requirement field, where n is a positive integer.

The number index information field occupies 4 bits, the information transmission number field occupies 1 bit, each information transmission field occupies 3 bits, the time information field occupies 8 bits, the information type field occupies 4 bits, the information content field occupies 5 bits, the transmission channel field occupies 4 bits, the information amount related information field occupies 4 bits, the reliability requirement field occupies 2 bits, and the delay requirement field occupies 2 bits.

The number index information field is used for indicating the number of the sub-information. The information transmission number field is used for indicating the number of times of the information transmissions, for example, in a case where the number of times of the information transmissions is 4, there are 4 information transmission fields. Each information transmission field is used for indicating one respective information transmission. The time information field is used for indicating the time information of a group of information transmissions. The information type field is used for indicating the type of the information transmitted in a group of information transmissions. The information content field is used for indicating the content of the information transmitted in a group of information transmissions. The transmission channel field is used for indicating a transmission channel for a group of information transmissions. The information amount related information field is used for indicating the information amount related information transmitted in a group of information transmissions. The reliability requirement field is used for indicating the reliability requirement of a group of information transmissions. The delay requirement field is used for indicating the delay requirement of a group of information transmissions. The group of information transmissions in the sub-information represents the same group of information transmissions, for example, the j-th group of information transmissions, where j is a positive integer.

The formats of the sub-information of the first information are two exemplary possible cases. In different embodiments or different designs, a case where at least one of: the arrangement order between the aforementioned fields and other fields, the number of occupied bits, or the field name is changed is not excluded, which is not limited in the embodiment.

In some embodiments, a part of values and meanings of the information transmission index information field are shown in Table 1, where n is a positive integer.

**Table 1**

| Value of the information transmission index information field | Meaning |
|---|---|
| A1-th value | First one information transmission |
| A2-th value | Second one information transmission |
| ... | ... |
| An-th value | n-th one information transmission |

In some embodiments, the time information field includes at least one of three types: a first type of time information field, a second type of time information field, or a third type of time information field. The first type of time information field may also be referred to as a type field of reference time point, the second type of time information field may also be referred to as a reference subcarrier spacing representation field, and the third type of time information field may also be referred to as a time unit number information value field. The names of the fields are only examples, which are not limited in the embodiments of the present disclosure.

In some embodiments, a part of values and meanings of the first type of time information field are shown in Table 2.

**Table 2**

| Value of the reference time point field | Meaning |
|---|---|
| B11-th value | Adjacent previous information transmission |
| B12-th value | Adjacent subsequent information transmission |
| B13-th value | First one information transmission |
| B14-th value | Last one information transmission |

In some embodiments, a part of values and meanings of the second type of time information field are shown in Table 3.

**Table 3**

| Value of the reference subcarrier spacing field | Meaning |
|---|---|
| B21-th value | Reference subcarrier spacing pre-configured by the network device |
| B22-th value | Subcarrier spacing used by the first one information transmission |
| B23-th value | Subcarrier spacing used by the first one of two adjacent information transmissions |
| B24-th value | Subcarrier spacing used by the second one of two adjacent information transmissions |
| B25-th value | Subcarrier spacing used by the first one of two associated information transmissions |
| B26-th value | Subcarrier spacing used by the second one of two associated information transmissions |
| B27-th value | Subcarrier spacing used by the first one downlink information transmission |
| B28-th value | Subcarrier spacing used by the first one uplink information transmission |

In some embodiments, a part of values and meanings of the third type of time information field are shown in Table 4, where n is a positive integer.

**Table 4**

| Value of time unit number information field | Meaning |
|---|---|
| B31-th value | Value is x1 |
| B32-th value | Value is x2 |
| ··· | ... |
| B3n-th value | Value is xn |

In some embodiments, a part of values and meanings of the information type field are shown in Table 5.

**Table 5**

| Value of the information type field | Meaning | Value of the information type field | Meaning |
|---|---|---|---|
| C1-th value | Downlink control signaling | C8-th value | Uplink synchronization information |
| C2-th value | Downlink data | C9-th value | Broadcast information |
| C3-th value | Uplink control signaling | C10-th value | Multicast information |
| C4-th value | Uplink data | C11-th value | Unicast information |
| C5-th value | Downlink information | C12-th value | Terminal-specific downlink information |
| C6-th value | Uplink information | C13-th value | Terminal-specific uplink information |
| C7-th value | Downlink synchronization information | C14-th value | Reference signal |

In some embodiments, a part of values and meanings of the transmission channel field are shown in Table 6.

**Table 6**

| Value of the transmission channel field | Meaning | Value of the transmission channel field | Meaning |
|---|---|---|---|
| D1-th value | Downlink control channel | D7-th value | Downlink synchronization channel |
| D2-th value | Downlink shared channel | D8-th value | Uplink synchronization channel |
| D3-th value | Uplink control channel | D9-th value | Broadcast channel |
| D4-th value | Uplink shared channel | D10-th value | Multicast channel |
| D5-th value | Downlink channel | D11-th value | Unicast channel |
| D6-th value | Uplink channel | D12-th value | Terminal-specific channel |

In some embodiments, the information amount related information field includes at least one of two types: a first type of information amount field, or a second type of information amount field. The first type of information amount field may also be referred to as a type field of the information amount, and the second type of information amount field may also be referred to as a value field of the information amount. The names of the fields are only examples, which are not limited in the embodiments of the present disclosure.

In some embodiments, a part of values and meanings of the first type of information amount field are shown in Table 7.

**Table 7**

| Value of the information amount related information field | Meaning |
|---|---|
| E11-th value | The number of TBSs |
| E12-th value | The number of bits |
| E13-th value | The number of codewords |

In some embodiments, in addition to indicating the value type of the information amount, the type field of the information amount may also be used for indicating other types, such as, a statistical information type of the information, a value type of the information amount level, an interval type of the information amount level, format type of the information, an algorithm type for calculating the information amount, and the like. Tables and values may be respectively designed for the aforementioned types of the information amount, which will not be described in detail herein.

In some embodiments, a part of values and meanings of the second type of information amount field are shown in Table 8, where n is a positive integer.

**Table 8**

| Value of the information amount related information field | Meaning |
|---|---|
| E21-th value | Value is y1 |
| E22-th value | Value is y2 |
| ... | ... |
| E2n-th value | Value is yn |

The values and meanings of each field in the aforementioned tables are only exemplary cases, and other values and other corresponding meanings may be set. The aforementioned multiple tables may be combined into one table or one table may be split into multiple tables, and different rows of different tables may be freely combined, which is not limited in the embodiments of the present disclosure.

In a first embodiment, as shown in FIG. 2, the first communication device being a terminal device and the second communication device being a network device is taken as an example.
(1) The downlink information 1 is the downlink control signaling (corresponding to the downlink control channel), and a format of the downlink control signaling is a format A.

The downlink control signaling is used for scheduling or indicating transmission characteristic information of (all or a part of) subsequent information transmissions, i.e., one piece of downlink control signaling indicates multiple physical channels, and the multiple physical channels include an uplink channel and/or a downlink channel.

The downlink information 1 is indicated through the information transmission index information field. For example, the value of the information transmission index information field is the A1-th value, it represents that the downlink information 1 is the first one information transmission.

The information type of the downlink information 1 is indicated through the information type field. For example, the value of the information type field is the C1-th value, it represents that the downlink information 1 is the downlink control signaling.

Various information fields included in the downlink information 1 are indicated through the information content field, the information content of the downlink information 1 includes at least one information field, and the information content of the downlink information 1 is indicated through the information content in the at least one information field.

The transmission channel for the downlink information 1 is indicated through the transmission channel field. For example, the value of the transmission channel field is the D1-th value, it represents that the transmission channel for the downlink information 1 is the downlink control channel.

(2) The downlink information 2 is the downlink data (corresponding to the downlink shared channel). The information amount is the first TBS. The time interval between the starting point of the downlink information 2 and the starting point of the downlink information 1 is t1 (or the time interval at least is t1, or the maximum time interval is the t1, or t1 is a value set or a value range).

In the case where the first TBS represents the value range, the downlink control signaling (downlink information 1) indicates a specific value from the value range, thereby reducing the overhead of the downlink signaling.

The downlink information 2 is indicated through the information transmission index information field. For example, the value of the information transmission index information field is the A2-th value, it represents that the downlink information 2 is the second one information transmission.

The time information of the downlink information 2 is indicated through the time information field, and the time information field is used for representing the type of the time interval. For example, a value of the time information field is the B11-th value, it represents that the time information of the downlink information 2 is a time unit between the downlink information 2 and the adjacent previous information transmission.

Alternatively, the time information field is used for representing a representation manner of the time information. For example, the value of the time information field is the B22-th value, it represents that the time information of the downlink information 2 is represented through the number of time units. The time units are the time units corresponding to the subcarrier spacing used by the first one information transmission.

Alternatively, the time information field is used for representing a value of the time interval. For example, the value of the time information field is the B31-th value, it represents that the value of the time interval is t1.

Alternatively, the time information field is used for representing the free combination of the type of the time interval, the representation manner of the time information, and the value of the time interval, which is not limited in the embodiments of the present disclosure.

The information type of the downlink information 2 is indicated through the information type field. For example, the value of the information type field is the C2-th value, it represents that the downlink information 2 is the downlink data.

The transmission channel for the downlink information 2 is indicated through the transmission channel field. For example, the value of the transmission channel field is the D2-th value, it represents that the transmission channel for the downlink information 2 is the downlink shared channel.

The information amount related information of the downlink information 2 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E21-th value, it indicates that the time amount is the first TBS.

Alternatively, the information amount related information field is used for representing a combination of the type of information amount related information and the value of the information amount, which is not limited in the embodiments of the present disclosure.

(3) The uplink information 1 is the uplink control signaling (corresponding to an uplink control channel), and the time interval between the starting point of the uplink information 1 and the starting point of the downlink information 2 is t2.

The information content of the uplink information 1 includes feedback acknowledgment information, channel state information, a scheduling request, and a buffer status report.

The uplink information 1 is indicated through the information transmission index information field. For example, the value of the information transmission index information field is the A3-th value, it represents that the uplink information 1 is the third one information transmission.

The time information of the uplink information 1 is indicated through the time information field, and the time information field is used for representing the type of the time interval. For example, the value of the time information field is the B11-th value, it represents that the time information of the uplink information 1 is a time unit between the uplink information 1 and the adjacent previous information transmission.

Alternatively, the time information field is used for representing a representation manner of the time information. For example, the value of the time information field is the B22-th value, it represents that the uplink information 1 is represented through the number of time units. The time units are the time units corresponding to the subcarrier spacing used by the first one information transmission.

Alternatively, the time information field is used for representing a value of the time interval. For example, the value of the time information field is the B32-th value, it represents that the value of the time interval is t2.

Alternatively, the time information field is used for representing the free combination of the type of the time interval, the representation manner of the time information, and the value of the time interval, which is not limited in the embodiments of the present disclosure.

The information type of the uplink information 1 is indicated through the information type field. For example, the value of the information type field is the C3-th value, it represents that the uplink information 1 is the uplink control signaling.

Various information fields included in the uplink information 1 are indicated through the information content field, the information content of the uplink information 1 includes at least one information field, and the information content of the uplink information 1 is indicated through the information content in the at least one information field.

The transmission channel for the uplink information 1 is indicated through the transmission channel field. For example, the value of the transmission channel field is the D3-th value, it represents that the transmission channel for the uplink information 1 is the uplink control channel.

(4) The downlink information 3 is the downlink data (corresponding to the downlink shared channel). The information amount is the second TBS. The time interval between the starting point of the downlink information 3 and the starting point of the uplink information 1 is t3.

The downlink information 3 is indicated through the information transmission index information field. For example, the value of the information transmission index information field is the A4-th value, it represents that the downlink information 3 is the fourth one information transmission.

The time information of the downlink information 3 is indicated through the time information field, and the time information field is used for representing the type of the time interval. For example, a value of the time information field is the B11-th value, it represents that the time information of the downlink information 3 is a time unit between the downlink information 3 and the adjacent previous information transmission.

Alternatively, the time information field is used for representing a representation manner of the time information. For example, the value of the time information field is the B22-th value, it represents that the downlink information 3 is represented through the number of time units. The time units are the time units corresponding to the subcarrier spacing used by the first one information transmission.

Alternatively, the time information field is used for representing a value of the time interval. For example, the value of the time information field is the B33-th value, it represents that the value of the time interval is t3.

Alternatively, the time information field is used for representing the free combination of the type of the time interval, the representation manner of the time information, and the value of the time interval, which is not limited in the embodiments of the present disclosure.

The information type of the downlink information 3 is indicated through the information type field. For example, the value of the information type field is the C2-th value, it represents that the downlink information 3 is the downlink data.

The transmission channel for the downlink information 3 is indicated through the transmission channel field. For example, the value of the transmission channel field is the D2-th value, it represents that the transmission channel for the downlink information 3 is the downlink shared channel.

The information amount related information of the downlink information 3 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E22-th value, it indicates that the time amount is the second TBS.

Alternatively, the information amount related information field is used for representing a combination of the type of information amount related information and the value of the information amount, which is not limited in the embodiments of the present disclosure.

(5) The uplink information 2 is the uplink data (corresponding to the uplink shared channel). The information amount is the third TBS. The time interval between the starting point of the uplink information 2 and the starting point of the downlink information 3 is t4.

The uplink information 2 is indicated through the information transmission index information field. For example, the value of the information transmission index information field is the A5-th value, it represents that the uplink information 2 is the fifth one information transmission.

The time information of the uplink information 2 is indicated through the time information field, and the time information field is used for representing the type of the time interval. For example, a value of the time information field is the B11-th value, it represents that the time information of the uplink information 2 is a time unit between the uplink information 2 and the adjacent previous information transmission.

Alternatively, the time information field is used for representing a representation manner of the time information. For example, the value of the time information field is the B22-th value, it represents that the time information of the uplink information 2 is represented through the number of time units. The time units are the time units corresponding to the subcarrier spacing used by the first one information transmission.

Alternatively, the time information field is used for representing a value of the time interval. For example, the value of the time information field is the B34-th value, it represents that the value of the time interval is t4.

Alternatively, the time information field is used for representing the free combination of the type of the time interval, the representation manner of the time information, and the value of the time interval, which is not limited in the embodiments of the present disclosure.

The information type of the uplink information 2 is indicated through the information type field. For example, the value of the information type field is the C4-th value, it represents that the uplink information 2 is the uplink data.

The transmission channel of the uplink information 2 is indicated through the transmission channel field. For example, the value of the transmission channel field is the D4-th value, it represents that the transmission channel for the uplink information 2 is the uplink shared channel.

The information amount related information of the uplink information 2 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E23-th value, it represents that the time amount is the third TBS.

Alternatively, the information amount related information field is used for representing a combination of the type of information amount related information and the value of the information amount, which is not limited in the embodiments of the present disclosure.

In a second embodiment, as shown in FIG. 2, the first communication device being a terminal device and the second communication device being a network device is taken as an example.
(1) The downlink information 1 is the downlink control signaling (corresponding to the downlink control channel), and a format of the downlink control signaling is a format A.

The downlink control signaling is used for scheduling or indicating transmission characteristic information of (all or a part of) subsequent information transmissions, i.e., one piece of downlink control signaling indicates multiple physical channels, and the multiple physical channels include an uplink channel and/or a downlink channel.

The downlink information 1 is indicated through the information transmission index information field. For example, the value of the information transmission index information field is the A1-th value, it represents that the downlink information 1 is the first one information transmission.

The information type of the downlink information 1 is indicated through the information type field. For example, the value of the information type field is the C1-th value, it represents that the downlink information 1 is the downlink control signaling.

Various information fields included in the downlink information 1 are indicated through the information content field, the information content of the downlink information 1 includes at least one information field, and the information content of the downlink information 1 is indicated through the information content in the at least one information field.

The transmission channel for the downlink information 1 is indicated through the transmission channel field. For example, the value of the transmission channel field is the D1-th value, it represents that the transmission channel for the downlink information 1 is the downlink control channel.

(2) The downlink information 2 is the terminal-specific downlink information (corresponding to the terminal-specific channel). The time interval between the starting point of the downlink information 2 and the starting point of the downlink information 1 is t1 (or the time interval at least is t1, or the maximum time interval is the t1, or t1 is a value set or a value range).

The downlink information 2 is indicated through the information transmission index information field. For example, the value of the information transmission index information field is the A2-th value, it represents that the downlink information 2 is the second one information transmission.

The time information of the downlink information 2 is indicated through the time information field, and the time information field is used for representing the type of the time interval. For example, a value of the time information field is the B13-th value, it represents that the time information of the downlink information 2 is a time unit between the downlink information 2 and the first one information transmission.

Alternatively, the time information field is used for representing a representation manner of the time information. For example, the value of the time information field is the B22-th value, it represents that the time information of the downlink information 2 is represented through the number of time units. The time units are the time units corresponding to the subcarrier spacing used by the first one information transmission.

Alternatively, the time information field is used for representing a value of the time interval. For example, the value of the time information field is the B35-th value, it indicates that the value of the time interval is t1.

Alternatively, the time information field is used for representing the free combination of the type of the time interval, the representation manner of the time information, and the value of the time interval, which is not limited in the embodiments of the present disclosure.

The information type of the downlink information 2 is indicated through the information type field. For example, the value of the information type field is the C12-th value, it represents that the downlink information 2 is the terminal-specific downlink information.

The transmission channel for the downlink information 2 is indicated through the transmission channel field. For example, the value of the transmission channel field is the D12-th value, it represents that the transmission channel for the downlink information 2 is the terminal-specific channel.

(3) The uplink information 1 is the uplink control signaling (corresponding to an uplink control channel), and the time interval between the starting point of the uplink information 1 and the starting point of the downlink information 1 is T2. The time interval is indicated through the manner of referencing the starting point of the downlink information 1.

The information content of the uplink information 1 includes feedback acknowledgment information, channel state information, and uplink channel demodulation assistance information.

The uplink information 1 is indicated through the information transmission index information field. For example, the value of the information transmission index information field is the A3-th value, it represents that the uplink information 1 is the third one information transmission.

The time information of the uplink information 1 is indicated through the time information field, and the time information field is used for representing the type of the time interval. For example, a value of the time information field is the B13-th value, it represents that the time information of the uplink information 1 is a time unit between the uplink information 1 and the first one information transmission.

Alternatively, the time information field is used for representing a representation manner of the time information. For example, the value of the time information field is the B22-th value, it represents that the time information of the uplink information 1 is represented through the number of time units. The time units are the time units corresponding to the subcarrier spacing used by the first one information transmission.

Alternatively, the time information field is used for representing a value of the time interval. For example, the value of the time information field is the B36-th value, it indicates that the value of the time interval is T2.

Alternatively, the time information field is used for representing the free combination of the type of the time interval, the representation manner of the time information, and the value of the time interval, which is not limited in the embodiments of the present disclosure.

The information type of the uplink information 1 is indicated through the information type field. For example, the value of the information type field is the C3-th value, it represents that the uplink information 1 is the uplink control signaling.

Various information fields included in the uplink information 1 are indicated through the information content field, the information content of the uplink information 1 includes at least one information field, and the information content of the uplink information 1 is indicated through the information content in the at least one information field.

The transmission channel for the uplink information 1 is indicated through the transmission channel field. For example, the value of the transmission channel field is the D3-th value, it represents that the transmission channel for the uplink information 1 is the uplink control channel.

(4) The downlink information 3 is the downlink data (corresponding to the downlink shared channel). The information amount is the first TBS. The time interval between the starting point of the downlink information 3 and the starting point of the downlink information 1 is T3.

In the case where the first TBS represents the value range, the downlink control signaling (downlink information 1) indicates a specific value from the value range, thereby reducing the overhead of the downlink signaling.

The downlink information 3 is indicated through the information transmission index information field. For example, the value of the information transmission index information field is the A4-th value, it represents that the downlink information 3 is the fourth one information transmission.

The time information of the downlink information 3 is indicated through the time information field, and the time information field is used for representing the type of the time interval. For example, a value of the time information field is the B13-th value, it represents that the time information of the uplink information 1 is a time unit between the uplink information 1 and the first one information transmission.

Alternatively, the time information field is used for representing a representation manner of the time information. For example, the value of the time information field is the B22-th value, it represents that the time information of the downlink information 3 is represented through the number of time units. The time units are the time units corresponding to the subcarrier spacing used by the first one information transmission.

Alternatively, the time information field is used for representing a value of the time interval. For example, the value of the time information field is the B37-th value, it indicates that the value of the time interval is T3.

Alternatively, the time information field is used for representing the free combination of the type of the time interval, the representation manner of the time information, and the value of the time interval, which is not limited in the embodiments of the present disclosure.

The information type of the downlink information 3 is indicated through the information type field. For example, the value of the information type field is the C2-th value, it represents that the downlink information 3 is the downlink data.

The transmission channel for the downlink information 3 is indicated through the transmission channel field. For example, the value of the transmission channel field is the D2-th value, it represents that the transmission channel for the downlink information 3 is the downlink shared channel.

The information amount related information of the downlink information 3 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E21-th value, it indicates that the time amount is the first TBS.

Alternatively, the information amount related information field is used for representing a combination of the type of information amount related information and the value of the information amount, which is not limited in the embodiments of the present disclosure.

(5) The uplink information 2 is the uplink data (corresponding to the uplink shared channel). The information amount is the second TBS. The time interval between the starting point of the uplink information 2 and the starting point of the downlink information 1 is T4.

The uplink information 2 is indicated through the information transmission index information field. For example, the value of the information transmission index information field is the A5-th value, it represents that the uplink information 2 is the fifth one information transmission.

The time information of the uplink information 2 is indicated through the time information field, and the time information field is used for representing the type of the time interval. For example, a value of the time information field is the B13-th value, it represents that the time information of the uplink information 1 is a time unit between the uplink information 1 and the first one information transmission.

Alternatively, the time information field is used for representing a representation manner of the time information. For example, the value of the time information field is the B22-th value, it represents that the time information of the uplink information 2 is represented through the number of time units. The time units are the time units corresponding to the subcarrier spacing used by the first one information transmission.

Alternatively, the time information field is used for representing a value of the time interval. For example, the value of the time information field is the B38-th value, it represents that the value of the time interval is T4.

Alternatively, the time information field is used for representing the free combination of the type of the time interval, the representation manner of the time information, and the value of the time interval, which is not limited in the embodiments of the present disclosure.

The information type of the uplink information 2 is indicated through the information type field. For example, the value of the information type field is the C4-th value, it represents that the uplink information 2 is the uplink data.

The transmission channel for the uplink information 2 is indicated through the transmission channel field. For example, the value of the transmission channel field is the D4-th value, it represents that the transmission channel for the uplink information 2 is the uplink shared channel.

The information amount related information of the uplink information 2 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E22-th value, it indicates that the time amount is the second TBS.

Alternatively, the information amount related information field is used for representing a combination of the type of information amount related information and the value of the information amount, which is not limited in the embodiments of the present disclosure.

The specific types of multiple information transmissions in a group of information transmissions may be freely combined according to the time information, the information type, the information content, the transmission channel, the information amount related information, the reliability requirement, and the delay requirement in the aforementioned embodiments. The first embodiment and the second embodiment are only exemplary embodiments, and the values of each field are only exemplary values, which are not limited in the present disclosure.

In some embodiments, the first communication device is a terminal device, and the second communication device is a network device. In a case where the second communication device receives the first information, the second communication device sends configuration information based on the first information.

In the case where the second communication device receives the first information, the second communication device sends the configuration information based on the transmission characteristic information, and the transmission characteristic information is determined by the first information.

As shown in FIG. 2, information related to the first information transmission group includes: the downlink information 1, the downlink information 2, the downlink information 3, the uplink information 1, and the uplink information 2. Exemplarily, the downlink information 1 is the downlink control signaling, the downlink information 2 and the downlink information 3 are the downlink data, uplink information 1 is the scheduling request, and uplink information 2 is the uplink data.

In some embodiments, after the second communication device acquires the transmission characteristic information of the first information transmission group, the second communication device may not configure the scheduling request (uplink information 1) in the subsequent transmission, which can save signaling overhead compared with configuring all the information every time.

In some embodiments, the transmission characteristic information includes time information of one of at least two information transmissions. The second communication device configures, based on the time information, transmission resources respectively corresponding to the downlink information 1, the downlink information 2, the downlink information 3, the uplink information 1, and the uplink information 2. Compared with configuring transmission resources corresponding to one piece of information at a time, configuring transmission resources corresponding to multiple pieces of information based on the first information can save the signaling overhead.

In some embodiments, the transmission characteristic information includes the type of the information transmitted in at least one of the at least two information transmissions, and transmission resources suitable for different information types are configured according to the type of the information.

In some embodiments, the transmission characteristic information includes the content of the information transmitted in at least one of the at least two information transmissions, and the same information content is combined according to the content of the information. For example, the same grant information is combined into one piece of grant information, thereby reducing redundant signaling overhead.

In some embodiments, the transmission characteristic information includes a transmission channel for at least one of the at least two information transmissions, and transmission resources corresponding to different transmission channels are configured according to the transmission channel.

In some embodiments, the transmission characteristic information includes information amount related information transmitted in at least one of the at least two information transmissions, and the information transmission rate is configured according to the information amount related information, so as to facilitate the network scheduling and the data management.

In some embodiments, the transmission characteristic information includes the reliability requirement and/or the delay requirement of the at least one of the at least two information transmissions, and an appropriate transmission protocol may be selected according to the reliability requirement and/or the delay requirement, and transmission resources may be configured according to the reliability requirement and/or the delay requirement, so as to ensure that actual requirements can be met.

In some embodiments, the scheduling information is sent based on the transmission characteristic information, and the scheduling information is used for scheduling resources required for the at least two information transmissions.

Optionally, the information types of the at least two information transmissions scheduled by the scheduling information are different, the transmission channels for the at least two information transmissions scheduled by the scheduling information are different, or the information contents of the at least two information transmissions scheduled by the scheduling information are different.

In summary, the method provided by the embodiment causes the communication device to determine the transmission characteristic information through sending or receiving the first information, which can save the signaling overhead in the information transmission and improve the transmission efficiency of the communication system.

According to the method provided by the embodiment, a group of information transmissions are also directly scheduled or triggered through one piece of control signaling, which saves the signaling overhead and reduces the power consumption of the communication device compared with using multiple pieces of signaling. The control signaling only needs to indicate a few parameters, such as, the frequency-domain resources, the precoding information, etc., which improves the transmission efficiency.

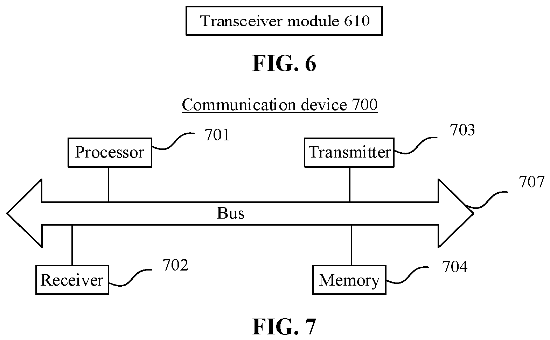

FIG. 6 illustrates a block diagram of a first device for information transmission according to an exemplary embodiment of the present disclosure. The device may be implemented as a first communication device or as a part of the first communication device through the software or hardware, or a combination of both. The device includes a transceiver module 610.

The transceiver module 610 is configured to send or receive first information. The first information is used for determining transmission characteristic information corresponding to a first information transmission group between the first communication device and a second communication device. The first information transmission group includes at least two information transmissions.

When the transceiver module 610 is configured to perform the operation of sending the first information, the transceiver module 610 includes a sending module. When the transceiver module 610 is configured to perform the operation of receiving the first information, the transceiver module 610 includes a receiving module. In a possible design of the embodiment, the transceiver module 610 includes only the sending module. In a possible design of this embodiment, the transceiver module 610 includes only the receiving module. In this embodiment, the transceiver module 610 including both the sending module and the receiving module is taken as an example for illustration.

In a possible design of the embodiment, the first information transmission group has the periodicity or does not have the periodicity.

As shown in FIG. 2, information related to the first information transmission group includes: the downlink information 1, the downlink information 2, the downlink information 3, the uplink information 1, and the uplink information 2. The occurrence of the information transmissions may have the periodicity. For example, the time interval between the starting point of the first information transmission group and the starting point of the second information transmission group is T0, i.e. the occurrence period of the information transmissions is T0. The occurrence of information transmissions may do not have the periodicity, i.e., the occurrence of different groups of information transmissions are random.

Through binding at least two information transmissions into one group of information transmissions, it is convenient for the communication device to acquire the transmission characteristic information of the related multiple information transmissions.

In a possible design of the embodiment, in the case where the occurrence of the group of information transmissions has the periodicity, the first communication device sends a first parameter to the second communication device. The first parameter is used for indicating a period of the occurrence of the group of information transmissions. For example, the time interval T0 between the starting point of the first information transmission group and the starting point of the second information transmission group in FIG. 2 is the period of the occurrence of information transmission indicated by the first parameter.

In a possible design of the embodiment, the transmission characteristic information includes at least one of:

time information of one of the at least two information transmissions; a type of information transmitted in one of the at least two information transmissions; a content of information transmitted in one of the at least two information transmissions; a format of information transmitted in one of the at least two information transmissions; a transmission channel for one of the at least two information transmissions; information amount related information transmitted in one of the at least two information transmissions; a reliability requirement of one of the at least two information transmissions; or a delay requirement of one of the at least two information transmissions.

Through indicating the transmission characteristic information, a specific characteristic of one of the at least two information transmissions is represented.

In a possible design of the embodiment, the first information includes at least one piece of sub-information, and the number of the at least one piece of sub-information is less than or equal to the number of the at least two information transmissions, A single piece of sub-information among the at least one piece of sub-information is used for determining transmission characteristic information of at least one of the at least two information transmissions. It may also be understood as: the correspondence between the at least one piece of sub-information and the at least two information transmissions is one-to-one or one-to-many.

In a possible design of the embodiment, the single piece of sub-information among the at least one piece of sub-information is used for determining one kind of transmission characteristic information of one of the at least two information transmissions.

In a possible design of the embodiment, the single piece of sub-information among the at least one piece of sub-information is used for determining multiple kinds or all of transmission characteristic information of one of the at least two information transmissions.

In a possible design of the embodiment, the single piece of sub-information among the at least one piece of sub-information is used for determining the same transmission characteristic information of multiple information transmissions among the at least two information transmissions.

In a possible design of the embodiment, the single piece of sub-information among the at least one piece of sub-information is used for determining multiple kinds of or all of transmission characteristic information of multiple information transmissions among the at least two information transmissions.

In a possible design of the embodiment, the multiple information transmissions are consecutive multiple same information transmissions. Alternatively, the multiple information transmissions are multiple information transmissions that have an association.

Exemplarily, the at least two information transmissions are N information transmissions, where N is greater than or equal to 2. The first information includes M pieces of sub-information, where M is less than or equal to N. A single piece of sub-information among the M pieces of sub-information is used for determining one kind of transmission characteristic information of one of the N information transmissions, for example, for determining the information type of the downlink information 1 shown in FIG. 2. Alternatively, the single piece of sub-information among the M pieces of sub-information is used for determining multiple kinds of transmission characteristic information of one of the N information transmissions, for example, for determining the information type and information content of the downlink information 2 shown in FIG. 2. The number and the specific type of the determined transmission characteristic information are not limited in the embodiments of the present disclosure.

In a possible design of the embodiment, the single piece of sub-information is used for carrying at least one of following information.

Number index information of the single piece of sub-information; time information of at least one of the at least two information transmissions; a type of information transmitted in at least one of the at least two information transmissions; a content of information transmitted in at least one of the at least two information transmissions; a format of information transmitted in at least one of the at least two information transmissions; a transmission channel for at least one of the at least two information transmissions; information amount related information transmitted in at least one of the at least two information transmissions; a reliability requirement of at least one of the at least two information transmissions; or a delay requirement of at least one information transmission of the at least two information transmissions.

**The time information**.

In a possible design of the embodiment, the time information of one of the at least two information transmissions is represented through an absolute time length or a number of time units.

The time unit includes at least one of: a frame, a subframe, a slot, a sub-slot, and a time-domain symbol. For example, t1 in FIG. 2 may be represented through n slots, where n is a positive integer.

The time information being represented through the absolute time length is easy to understand and has the uniform. The time information being represented through the number of time units is more flexible and convenient to calculate.

In a possible design of the embodiment, different subcarrier spacing is used for the at least two information transmissions, and the time units include at least one of:
time units corresponding to a subcarrier spacing used by a first one of the at least two information transmissions; time units corresponding to a subcarrier spacing used by a first one of two adjacent information transmissions among the at least two information transmissions; time units corresponding to a subcarrier spacing used by a second one of the two adjacent information transmissions among the at least two information transmissions; time units corresponding to a subcarrier spacing used by a first one of two associated information transmissions among the at least two information transmissions; time units corresponding to a subcarrier spacing used by a second one of the two associated information transmissions among the at least two information transmissions; time units corresponding to a subcarrier spacing used by a first one downlink information transmission among the at least two information transmissions; time units corresponding to a subcarrier spacing used by a first one uplink information transmission among the at least two information transmissions; or time units corresponding to a reference subcarrier spacing pre-configured by a network device.

Herein, the two adjacent information transmissions represent two information transmissions that are adjacent in the time position, for example, the downlink information 1 and the downlink information 2 in FIG. 2. The association includes at least one of a relationship of scheduling and being scheduled or a relationship of requesting and responding. In a case where the two associated information transmissions represent the information transmission corresponding to the control signaling and the information transmission corresponding to data scheduled by the control signaling, for example, in a case where the downlink information 1 is DCI and the downlink information 3 is downlink data scheduled by the DCI, the information transmission corresponding to the downlink information 1 and the information transmission corresponding to the downlink information 3 are the two associated Information transmissions.

Exemplarily, as shown in FIG. 2, the information transmission corresponding to the downlink information 1 represents the first one of at least two information transmissions.

The downlink information 1 and the downlink information 2 being the two adjacent information transmissions is taken as an example, the information transmission corresponding to the downlink information 1 represents the first one of the two adjacent information transmissions among the at least two information transmissions, and the information transmission corresponding to the downlink information 2 represents the second one of the two adjacent information transmissions among the at least two information transmissions.

The downlink information 1 and the downlink information 3 being the two associated information transmissions is taken as an example, the information transmission corresponding to the downlink information 1 represents the first one of the two associated information transmissions among the at least two information transmissions, and the information transmission corresponding to the downlink information 3 represents the second one of the two associated information transmissions among the at least two information transmissions.

The information transmission corresponding to the downlink information 1 is the first one downlink transmission among the at least two information transmissions. The information transmission corresponding to the uplink information 1 is the first one uplink information transmission among the at least two information transmissions.

The time units with different types may be used for different application scenarios. For example, in a case where it is necessary to unify the time units, the time units corresponding to a subcarrier spacing used by the first one of the at least two information transmissions may be used; and in a case where it is necessary to simplify the calculation, the time units corresponding to a subcarrier spacing used by the first one of two adjacent information transmissions among the at least two information transmissions may be used.

In a possible design of the embodiment, the value of the time information is a first value.

In a possible design of the embodiment, the first value is a value in a first value set, or the first value is a value within a first value range.

In a possible design of the embodiment, the first information includes the first value set, or the first information includes the first value range.

Taking t1 in FIG. 2 as an example, t1 may be the first value. For example, t1 may be represented through n slots, where n is a positive integer. The t1 may also be a value in the first value set, for example, a value in {a1, a2, a3...}. A value in the first value set is represented by the absolute time length or the number of time units. The t1 may also be a value within the first value range. For example, t1 is a value in [A, B], where both A and B are greater than 0.

In a possible design of the embodiment, the time information includes at least one of:
a time interval or a time offset between the one information transmission and an adjacent previous information transmission; a time interval or a time offset between the one information transmission and an adjacent subsequent information transmission; a time interval or a time offset between the one information transmission and a first one of the at least two information transmissions; a time interval or a time offset between the one information transmission and a last one of the at least two information transmissions.

In FIG. 2, the information transmission corresponding to the downlink information 1 is the first one of the at least two information transmissions. Taking the one information transmission being the information transmission corresponding to the uplink information 1 as an example, a time interval or a time offset between the information transmission corresponding to the uplink information 1 and the information transmission corresponding to the downlink information 2 represents the time interval or the time offset between the one information transmission and the adjacent previous information transmission.

A time interval or a time offset between the information transmission corresponding to the uplink information 1 and the information transmission corresponding to the downlink information 3 represents the time interval or the time offset between the one information transmission and the adjacent subsequent information transmission.

A time interval or a time offset between the information transmission corresponding to the uplink information 1 and the information transmission corresponding to the downlink information 1 represents the time interval or the time offset between the one information transmission and the first one of the at least two information transmissions.

A time interval or a time offset between the information transmission corresponding to the uplink information 1 and the information transmission corresponding to the uplink information 2 represents the time interval or the time offset between the one information transmission and the last one of the at least two information transmissions.

The time intervals or time offsets with different types may be used for different application scenarios. For example, in a case where the simplified representation is required, the time interval or the time offset between the one information transmission and the adjacent previous information transmission may be used; in a case where a uniform representation is required and the time interval or the time offset between the one information transmission and the first one information transmission is small, the time interval or the time offset between the one information transmission and the first one of the at least two information transmissions may be used.

An agreed time relationship between multiple information transmissions is present, which is beneficial to reducing the overhead of the control signaling. After the time resources for the first one information transmission are determined, the time-domain resources (the time-domain starting resource) of the subsequent information transmission are determined successively, and are not required to be indicated by the physical layer signaling. Alternatively, the time-domain resources(the time-domain starting resource) of the subsequent transmission may be limited to be located within a small time range, and the indication range of the physical layer signaling can be narrowed, thereby reducing the signaling overhead; or the communication device only needs to detect the physical layer signaling within a small range, which is also beneficial to reducing the power consumption of the communication device.

**The type of information.**

In a possible design of the embodiment, the type of information includes at least one of:
downlink information; uplink information; downlink synchronization information; broadcast information; multicast information; unicast information; terminal-specific downlink information; downlink control information; downlink data information; uplink synchronization information; terminal-specific uplink information; uplink control information; uplink data information; or a reference signal.

In a possible design of the embodiment, the type of information transmitted in the one of the at least two information transmissions is used for determining a physical channel used by the one information transmission. A correspondence between the type of information and the physical channel includes at least one of the followings.

The downlink information corresponds to a downlink channel; the uplink information corresponds to an uplink channel; the downlink synchronization information corresponds to a downlink synchronization channel; the broadcast information corresponds to a broadcast channel; the multicast information corresponds to a multicast channel; the unicast information corresponds to a unicast channel; the terminal-specific downlink information corresponds to a terminal-specific channel; the downlink control information corresponds to a downlink control channel; the downlink data information corresponds to a downlink shared channel; the uplink synchronization information corresponds to an uplink synchronization channel; the terminal-specific uplink information corresponds to the terminal-specific channel; the uplink control information corresponds to an uplink control channel; or the uplink data information corresponds to an uplink shared channel. The reference signal does not correspond to a physical channel and the transmission of the reference signal is directly performed.

Through indicating the type of information and the corresponding physical channel, the type of information and the physical channel corresponding to the type of information that may be determined by the first information are represented, which is helpful for the receiving end to correctly parse and process the received information, and avoid confusing information with different types.

In a possible design of the embodiment, the type of information includes at least one of: configuration information; grant information; allocation information; downlink control signaling; physical layer control signaling; higher layer signaling; RRC signaling; MAC signaling; uplink control signaling; feedback acknowledgement information; channel state information; an SR; BSR; or uplink channel demodulation assistance information.

In the case where the type of information includes the configuration information, it is used for configuring various parameters and attributes of a communication device.

In the case where the type of information includes the grant information, it is used for granting the communication device to perform the data transmission on a specified time and frequency band.

In the case where the type of information includes the allocation information, it is used for allocating radio resources or time resources to the communication device.

In the case where the type of information includes the downlink control signaling, it is used for sending the control information of the downlink data transmission to the communication device.

In the case where the type of information includes the physical layer control signaling, it is used for performing the transmission of the signaling for controlling the transmission on the physical layer.

In the case where the type of information includes the higher layer signaling, it is used for performing the transmission of the signaling used in a higher layer protocol. The higher layer refers to a layer above the physical layer.

In the case where the type of information includes the RRC signaling, it is used for controlling access, handover, movement, connection state, etc. of the communication device.

In the case where the type of information includes the MAC signaling, it is used for performing the access control on a medium in the wireless network, including resource allocation, scheduling, transmission control, and the like.

In the case where the type of information includes the UCI, it is used for sending the control information of the uplink data transmission to the communication device.

In the case where the type of information includes the feedback acknowledgement information, it is used for representing an acknowledgement or a negative acknowledgement for the received data.

In the case where the type of information includes the channel state information, it is used for representing state information of the uplink channel and the downlink channel.

In the case where the type of information includes the SR, it is used for requesting the allocation of downlink resources, so as to meet the transmission requirement for the downlink data.

In the case where the type of information includes the BSR, it is used for indicating the data volume buffered by the communication device and the related state.

In the case where the type of information includes the uplink channel demodulation assistance information, it is used for indicating assistance information in the uplink transmission, so as to assist the communication device to perform the channel demodulation and data transmission.

In a possible design of the embodiment, the feedback acknowledgement information includes at least one of: an ACK or a NACK.

In a possible design of the embodiment, the channel state information includes at least one of: CSI, a CQI, a PMI, or a RI.

**The content of information.**

In a possible design of the embodiment, the content of information includes uplink data and/or downlink data.

In a possible design of the embodiment, uplink data and/or downlink data includes at least one of: a data packet; a TB; or a PDU.

In a possible design of the embodiment, the content of information includes an uplink synchronization signal and/or a downlink synchronization signal.

In a possible design of the embodiment, the uplink synchronization signal and/or the downlink synchronization signal includes at least one of: an SSB; a PRACH; a PSS; or an SSS.

In a possible design of the embodiment, the content of information includes an uplink reference signal and/or a downlink reference signal.

In a possible design of the embodiment, the uplink reference signal and/or the downlink reference signal includes at least one of: a DMRS; a CSI-RS; an SRS; or a PTRS.

Through indicating the content of information, the specific content of information transmitted in one information transmission that can be determined by the first information is represented, which is helpful to ensure the accuracy and integrity of the information.

**The transmission channel.**

In a possible design of the embodiment, the transmission channel includes at least one of:
a downlink channel; a downlink synchronization channel; a broadcast channel; a multicast channel; a unicast channel; a terminal-specific channel; a downlink control channel; a downlink shared channel; an uplink channel; an uplink synchronization channel; an uplink control channel; or an uplink shared channel.

In a possible design of the embodiment, the correspondence between the type of information and the physical channel includes at least one of the followings.

The downlink information corresponds to a downlink channel; the uplink information corresponds to an uplink channel; the downlink synchronization information corresponds to a downlink synchronization channel; the broadcast information corresponds to a broadcast channel; the multicast information corresponds to a multicast channel; the unicast information corresponds to a unicast channel; the terminal-specific downlink information corresponds to a terminal-specific channel; the downlink control information corresponds to a downlink control channel; the downlink data information corresponds to a downlink shared channel; the uplink synchronization information corresponds to an uplink synchronization channel; the terminal-specific uplink information corresponds to the terminal-specific channel; the uplink control information corresponds to an uplink control channel; or the uplink data information corresponds to an uplink shared channel.

Through indicating the transmission channel, it is helpful to make rational use of the wireless resources, meet the requirements of different channels for the transmission information, and improve the transmission efficiency.

**The information amount related information.**

In a possible design of the embodiment, the information amount related information includes at least one of: information for indicating information amount; information for determining the information amount; or a sequence length of a first sequence.

The first sequence is a sequence used for generating a reference signal or a synchronization signal. In the case where the content of information is the reference signal or the synchronization signal, the information amount related information is the sequence length.

In a possible design of the embodiment, the information for indicating the information amount includes at least one of: a value of the information amount; statistical information of the information amount; a value of an information amount level; or an interval of the information amount level. The information amount level is used for indicating a value range of the information amount.

The information amount related information may be used for directly indicating the information amount, including: a value of the information amount, for example, X bits, where X is a positive integer;
or, the statistical information of the information amount, for example, an average of the information amount, a variance of the information amount, a probability distribution of the information amount, and the like;
or, the information amount level, and different information amount levels correspond to different information amount value ranges, for example, the first level of the information amount level corresponds to 0 bits to 10 bits, and the second level of the information amount level corresponds to 11 bits to 20 bits;
or, an interval of the information amount level, for example, the first level to the fifth level of the information amount level.

In a possible design of the embodiment, the information for determining the information amount includes at least one of: the information format; or an algorithm used for calculating the information amount.

In a possible design of the embodiment, the format of information includes at least one of: a DCI format; or an UCI format.

For the uplink control signaling and the downlink control signaling, the format of information may be indicated, and different formats of information carry different information contents (information fields). All information contents (information fields) and/or the number of bits included in the control signaling may be acquired through the format of information.

In a possible design of the embodiment, the information amount is represented by a TBS. In order to obtain the value of the TBS, the calculation may be performed in the following manner.

The data channel, such as a PDSCH and a PUSCH, performs the data transmission in units of TBs. The determination of the TBS in the data channel may be divided into the following three operations. Taking the PDSCH as an example, the determination operation of the transport block size includes following three operations.
1) The number *N_{RE}* of Resource Elements (RE) of the PDSCH is determined, which includes following two operations.
   i. The number ${N}_{RE}^{′}$ of REs in one Physical Resource Block (PRB) is determined, and the calculation formula is: ${N}_{RE}^{′} = {N}_{sc}^{RB} \times {N}_{symb}^{sh} - {N}_{DMRS}^{PRB} - {N}_{oh}^{PRB} ;$
      where ${N}_{sc}^{RB} = 12$, it represents the number of subcarriers in one Resource Block (RB); ${N}_{symb}^{sh}$ is the number of symbols occupied by the PDSCH in one slot; ${N}_{DMRS}^{PRB}$ is the number of REs occupied by the DMRS within one PRB; and ${N}_{oh}^{PRB}$ is the number of overhead REs configured within one PRB. The number of the overhead REs includes: the number of REs occupied by the control signaling, such as, a synchronization channel, a Physical Broadcast CHannel (PBCH), a PDCCH, and a Physical Uplink Control CHannel (PUCCH).
   ii. The number *N_{RE}* of REs in the PDSCH is determined, and the calculation formula is: ${N}_{RE} = min \left(156, {N}_{RE}^{′}\right) \times {n}_{PRB} ;$
      where *n_{PRB}* is the number of PRBs allocated by the network device to the terminal device.
2) The intermediate information amount *N_{info}* carried by the PDSCH is calculated, and the calculation formula is: ${N}_{info} = {N}_{RE} \times R \times {Q}_{m} \times υ ;$
   where *N_{RE}* is the calculated number of REs in the PDSCH, R is the bit rate of the data transmission on the PDSCH, *Qₘ* is the modulation order of the data on the PDSCH, and *υ* represents the number of transmission layers of the PDSCH.
3) The TBS is determined based on the intermediate information amount *N_{info}.*
   i. If *N_{info}*≤3824, the transport block size is determined through a manner of quantizing and looking up in a table.
   ii. If *N_{info}*>3824, the transport block size is determined through a manner of quantization calculation.

Through indicating the information amount information and through the different representation manners of the information amount information, the information amount information can be flexibly adjusted according to actual requirements.

**The reliability requirement.**

In a possible design of the embodiment, the reliability requirement includes at least one of: data integrity, data accuracy or data reliability.

The data integrity represents that it is required to ensure that no data loss or damage occurs in the information transmission. The data accuracy represents that it is required to ensure that the transmitted information is consistent with the original information without the error or distortion. The data reliability represents that it is required to ensure that the transmitted data can be received and processed correctly on the target device without data loss or out-of-order due to the network problem.

**The delay requirement.**

In a possible design of the embodiment, the delay requirement includes at least one of: real-time, delay stability, or a maximum delay requirement.

The real-time represents that the delay of the information transmission is required to be very short. For example, application scenarios such as the video conference and the online game have high real-time requirement. The delay stability represents that the transmission delay of the information is required to have the stability, and no abnormal data transmission occurs due to the network fluctuation or congestion. The maximum delay requirement represents the longest allowable delay of the information transmission.

FIG. 4 illustrates a schematic diagram of a format of sub-information of first information according to an exemplary embodiment of the present disclosure. The sub-information of the first information includes at least one of: a number index information field, an information transmission index information field, a time information field, an information type field, an information content field, a transmission channel field, an information amount related information field, a reliability requirement field, or a delay requirement field.

The number index information field occupies 4 bits, the information transmission index information field occupies 4 bits, the time information field occupies 8 bits, the information type field occupies 4 bits, the information content field occupies 5 bits, the transmission channel field occupies 4 bits, the information amount related information field occupies 4 bits, the reliability requirement field occupies 2 bits, and the delay requirement field occupies 2 bits.

The number index information field is used for indicating the number of the sub-information. The information transmission index information field is used for indicating that the one information transmission is which one in a group of information transmissions. The time information field is used for indicating the time information of the one information transmission. The information type field is used for indicating the type of the information transmitted in the one information transmission. The information content field is used for indicating the content of the information transmitted in the one information transmission. The transmission channel field is used for indicating a transmission channel for the one information transmission. The information amount related information field is used for indicating the information amount related information transmitted in the one information transmission. The reliability requirement field is used for indicating the reliability requirement of the one information transmission. The delay requirement field is used for indicating the delay requirement of the one information transmission. The one information transmission in the sub-information represents the same one information transmission, for example, the i-th one information transmission, where i is a positive integer.

FIG. 5 illustrates a schematic diagram of a format of sub-information of first information according to an exemplary embodiment of the present disclosure. The sub-information of the first information includes at least one of: a number index information field, an information transmission number field, n information transmission fields, a time information field, an information type field, an information content field, a transmission channel field, an information amount related information field, a reliability requirement field, or a delay requirement field, where n is a positive integer.

The number index information field occupies 4 bits, the information transmission number field occupies 1 bit, each information transmission field occupies 3 bits, the time information field occupies 8 bits, the information type field occupies 4 bits, the information content field occupies 5 bits, the transmission channel field occupies 4 bits, the information amount related information field occupies 4 bits, the reliability requirement field occupies 2 bits, and the delay requirement field occupies 2 bits.

The number index information field is used for indicating the number of the sub-information. The information transmission number field is used for indicating the number of times of the information transmissions, for example, in a case where the number of times of the information transmissions is 4, there are 4 information transmission fields. Each information transmission field is used for indicating one respective information transmission. The time information field is used for indicating the time information of a group of information transmissions. The information type field is used for indicating the type of the information transmitted in a group of information transmissions. The information content field is used for indicating the content of the information transmitted in a group of information transmissions. The transmission channel field is used for indicating a transmission channel for the a group of information transmissions. The information amount related information field is used for indicating the information amount related information transmitted in a group of information transmissions. The reliability requirement field is used for indicating the reliability requirement of a group of information transmissions. The delay requirement field is used for indicating the delay requirement of a group of information transmissions. The group of information transmissions in the sub-information represents the same group of information transmissions, for example, the j-th group of information transmissions, where j is a positive integer.

The formats of the sub-information of the first information are two exemplary possible cases. In different embodiments or different designs, a case where at least one of: the arrangement order between the aforementioned fields and other fields, the number of occupied bits, or the field name is changed is not excluded, which is not limited in the embodiment.

In a possible design of the embodiment, a part of values and meanings of the information transmission index information field are shown in Table 1, where n is a positive integer. For specific details, the method embodiments may be referred to, which will not be repeated herein.

In a possible design of the embodiment, the time information field includes at least one of three types: a first type of time information field, a second type of time information field, or a third type of time information field. The first type of time information field may also be referred to as a type field of reference time point, the second type of time information field may also be referred to as a reference subcarrier spacing representation field, and the third type of time information field may also be referred to as a time unit number information value field. The names of the fields are only examples, which are not limited in the embodiments of the present disclosure. In a possible design of the embodiment, a part of values and meanings of the first type of time information field are shown in Table 2. A part of values and meanings of the second type of time information field are shown in Table 3. A part of values and meanings of the third type of time information field are shown in Table 4, where n is a positive integer. For specific details, the method embodiments may be referred to, which will not be repeated herein.

In a possible design of the embodiment, a part of values and meanings of the information type field are shown in Table 5. For specific details, the method embodiments may be referred to, which will not be repeated herein.

In a possible design of the embodiment, a part of values and meanings of the transmission channel field are shown in Table 6. For specific details, the method embodiments may be referred to, which will not be repeated herein.

In a possible design of the embodiment, the information amount related information field includes at least one of two types: a first type of information amount field, or a second type of information amount field. The first type of information amount field may also be referred to as a type field of the information amount, and the second type of information amount field may also be referred to as a value field of the information amount. The names of the fields are only examples, which are not limited in the embodiments of the present disclosure.

In a possible design of the embodiment, a part of values and meanings of the first type of information amount field are shown in Table 7. For specific details, the method embodiments may be referred to, which will not be repeated herein.

In a possible design of the embodiment, in addition to indicating the value type of the information amount, the type field of the information amount may also be used for indicating other types, such as, a statistical information type of the information, a value type of the information amount level, an interval type of the information amount level, format type of the information, an algorithm type for calculating the information amount, and the like. Tables and values may be respectively designed for the aforementioned types of the information amount, which will not be described in detail herein.

In a possible design of the embodiment, a part of values and meanings of the second type of information amount field are shown in Table 8, where n is a positive integer. For specific details, the method embodiments may be referred to, which will not be repeated herein.

The values and meanings of each field in the aforementioned tables are only exemplary cases, and other values and other corresponding meanings may be set. The aforementioned multiple tables may be combined into one table or one table may be split into multiple tables, and different rows of different tables may be freely combined, which is not limited in the embodiments of the present disclosure.

The first embodiment is as shown in FIG. 2.
(1) The downlink information 1 is the downlink control signaling (corresponding to the downlink control channel), and a format of the downlink control signaling is a format A.

The downlink control signaling is used for scheduling or indicating transmission characteristic information of (all or a part of) subsequent information transmissions, i.e., one piece of downlink control signaling indicates multiple physical channels, and the multiple physical channels include an uplink channel and/or a downlink channel.

The downlink information 1 is indicated through the information transmission index information field. For example, the value of the information transmission index information field is the A1-th value, it represents that the downlink information 1 is the first one information transmission.

The information type of the downlink information 1 is indicated through the information type field. For example, the value of the information type field is the C1-th value, it represents that the downlink information 1 is the downlink control signaling.

Various information fields included in the downlink information 1 are indicated through the information content field, the information content of the downlink information 1 includes at least one information field, and the information content of the downlink information 1 is indicated through the information content in the at least one information field.

The transmission channel for the downlink information 1 is indicated through the transmission channel field. For example, the value of the transmission channel field is the D1-th value, it represents that the transmission channel for the downlink information 1 is the downlink control channel.

(2) The downlink information 2 is the downlink data (corresponding to the downlink shared channel). The information amount is the first TBS. The time interval between the starting point of the downlink information 2 and the starting point of the downlink information 1 is t1 (or the time interval at least is t1, or the maximum time interval is the t1, or t1 is a value set or a value range).

In the case where the first TBS represents the value range, the downlink control signaling (downlink information 1) indicates a specific value from the value range, thereby reducing the overhead of the downlink signaling.

The downlink information 2 is indicated through the information transmission index information field. For example, the value of the information transmission index information field is the A2-th value, it represents that the downlink information 2 is the second one information transmission.

The time information of the downlink information 2 is indicated through the time information field, and the time information field is used for representing the type of the time interval. For example, a value of the time information field is the B11-th value, it represents that the time information of the downlink information 2 is a time unit between the downlink information 2 and the adjacent previous information transmission.

Alternatively, the time information field is used for representing a representation manner of the time information. For example, the value of the time information field is the B22-th value, it represents that the time information of the downlink information 2 is represented through the number of time units. The time units are the time units corresponding to the subcarrier spacing used by the first one information transmission.

Alternatively, the time information field is used for representing a value of the time interval. For example, the value of the time information field is the B31-th value, it represents that the value of the time interval is t1.

Alternatively, the time information field is used for representing the free combination of the type of the time interval, the representation manner of the time information, and the value of the time interval, which is not limited in the embodiments of the present disclosure.

The information type of the downlink information 2 is indicated through the information type field. For example, the value of the information type field is the C2-th value, it represents that the downlink information 2 is the downlink data.

The transmission channel for the downlink information 2 is indicated through the transmission channel field. For example, the value of the transmission channel field is the D2-th value, it represents that the transmission channel for the downlink information 2 is the downlink shared channel.

The information amount related information of the downlink information 2 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E21-th value, it indicates that the time amount is the first TBS.

Alternatively, the information amount related information field is used for representing a combination of the type of information amount related information and the value of the information amount, which is not limited in the embodiments of the present disclosure.

(3) The uplink information 1 is the uplink control signaling (corresponding to an uplink control channel), and the time interval between the starting point of the uplink information 1 and the starting point of the downlink information 2 is t2.

The information content of the uplink information 1 includes feedback acknowledgment information, channel state information, a scheduling request, and a buffer status report.

The uplink information 1 is indicated through the information transmission index information field. For example, the value of the information transmission index information field is the A3-th value, it represents that the uplink information 1 is the third one information transmission.

The time information of the uplink information 1 is indicated through the time information field, and the time information field is used for representing the type of the time interval. For example, the value of the time information field is the B11-th value, it represents that the time information of the uplink information 1 is a time unit between the uplink information 1 and the adjacent previous information transmission.

Alternatively, the time information field is used for representing a representation manner of the time information. For example, the value of the time information field is the B22-th value, it represents that the uplink information 1 is represented through the number of time units. The time units are the time units corresponding to the subcarrier spacing used by the first one information transmission.

Alternatively, the time information field is used for representing a value of the time interval. For example, the value of the time information field is the B32-th value, it represents that the value of the time interval is t2.

Alternatively, the time information field is used for representing the free combination of the type of the time interval, the representation manner of the time information, and the value of the time interval, which is not limited in the embodiments of the present disclosure.

The information type of the uplink information 1 is indicated through the information type field. For example, the value of the information type field is the C3-th value, it represents that the uplink information 1 is the uplink control signaling.

Various information fields included in the uplink information 1 are indicated through the information content field, the information content of the uplink information 1 includes at least one information field, and the information content of the uplink information 1 is indicated through the information content in the at least one information field.

The transmission channel for the uplink information 1 is indicated through the transmission channel field. For example, the value of the transmission channel field is the D3-th value, it represents that the transmission channel for the uplink information 1 is the uplink control channel.

(4) The downlink information 3 is the downlink data (corresponding to the downlink shared channel). The information amount is the second TBS. The time interval between the starting point of the downlink information 3 and the starting point of the uplink information 1 is t3.

The downlink information 3 is indicated through the information transmission index information field. For example, the value of the information transmission index information field is the A4-th value, it represents that the downlink information 3 is the fourth one information transmission.

The time information of the downlink information 3 is indicated through the time information field, and the time information field is used for representing the type of the time interval. For example, a value of the time information field is the B11-th value, it represents that the time information of the downlink information 3 is a time unit between the downlink information 3 and the adjacent previous information transmission.

Alternatively, the time information field is used for representing a representation manner of the time information. For example, the value of the time information field is the B22-th value, it represents that the downlink information 3 is represented through the number of time units. The time units are the time units corresponding to the subcarrier spacing used by the first one information transmission.

Alternatively, the time information field is used for representing a value of the time interval. For example, the value of the time information field is the B33-th value, it represents that the value of the time interval is t3.

Alternatively, the time information field is used for representing the free combination of the type of the time interval, the representation manner of the time information, and the value of the time interval, which is not limited in the embodiments of the present disclosure.

The information type of the downlink information 3 is indicated through the information type field. For example, the value of the information type field is the C2-th value, it represents that the downlink information 3 is the downlink data.

The transmission channel for the downlink information 3 is indicated through the transmission channel field. For example, the value of the transmission channel field is the D2-th value, it represents that the transmission channel for the downlink information 3 is the downlink shared channel.

The information amount related information of the downlink information 3 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E22-th value, it indicates that the time amount is the second TBS.

Alternatively, the information amount related information field is used for representing a combination of the type of information amount related information and the value of the information amount, which is not limited in the embodiments of the present disclosure.

(5) The uplink information 2 is the uplink data (corresponding to the uplink shared channel). The information amount is the third TBS. The time interval between the starting point of the uplink information 2 and the starting point of the downlink information 3 is t4.

The uplink information 2 is indicated through the information transmission index information field. For example, the value of the information transmission index information field is the A5-th value, it represents that the uplink information 2 is the fifth one information transmission.

The time information of the uplink information 2 is indicated through the time information field, and the time information field is used for representing the type of the time interval. For example, a value of the time information field is the B11-th value, it represents that the time information of the uplink information 2 is a time unit between the uplink information 2 and the adjacent previous information transmission.

Alternatively, the time information field is used for representing a representation manner of the time information. For example, the value of the time information field is the B22-th value, it represents that the time information of the uplink information 2 is represented through the number of time units. The time units are the time units corresponding to the subcarrier spacing used by the first one information transmission.

Alternatively, the time information field is used for representing a value of the time interval. For example, the value of the time information field is the B34-th value, it represents that the value of the time interval is t4.

Alternatively, the time information field is used for representing the free combination of the type of the time interval, the representation manner of the time information, and the value of the time interval, which is not limited in the embodiments of the present disclosure.

The information type of the uplink information 2 is indicated through the information type field. For example, the value of the information type field is the C4-th value, it represents that the uplink information 2 is the uplink data.

The transmission channel of the uplink information 2 is indicated through the transmission channel field. For example, the value of the transmission channel field is the D4-th value, it represents that the transmission channel for the uplink information 2 is the uplink shared channel.

The information amount related information of the uplink information 2 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E23-th value, it represents that the time amount is the third TBS.

Alternatively, the information amount related information field is used for representing a combination of the type of information amount related information and the value of the information amount, which is not limited in the embodiments of the present disclosure.

The second embodiment is as shown in FIG. 2.
(1) The downlink information 1 is the downlink control signaling (corresponding to the downlink control channel), and a format of the downlink control signaling is a format A.

The downlink control signaling is used for scheduling or indicating transmission characteristic information of (all or a part of) subsequent information transmissions, i.e., one piece of downlink control signaling indicates multiple physical channels, and the multiple physical channels include an uplink channel and/or a downlink channel.

The downlink information 1 is indicated through the information transmission index information field. For example, the value of the information transmission index information field is the A1-th value, it represents that the downlink information 1 is the first one information transmission.

The information type of the downlink information 1 is indicated through the information type field. For example, the value of the information type field is the C1-th value, it represents that the downlink information 1 is the downlink control signaling.

Various information fields included in the downlink information 1 are indicated through the information content field, the information content of the downlink information 1 includes at least one information field, and the information content of the downlink information 1 is indicated through the information content in the at least one information field.

The transmission channel for the downlink information 1 is indicated through the transmission channel field. For example, the value of the transmission channel field is the D1-th value, it represents that the transmission channel for the downlink information 1 is the downlink control channel.

(2) The downlink information 2 is the terminal-specific downlink information (corresponding to the terminal-specific channel). The time interval between the starting point of the downlink information 2 and the starting point of the downlink information 1 is t1 (or the time interval at least is t1, or the maximum time interval is the t1, or t1 is a value set or a value range).

The downlink information 2 is indicated through the information transmission index information field. For example, the value of the information transmission index information field is the A2-th value, it represents that the downlink information 2 is the second one information transmission.

The time information of the downlink information 2 is indicated through the time information field, and the time information field is used for representing the type of the time interval. For example, a value of the time information field is the B13-th value, it represents that the time information of the downlink information 2 is a time unit between the downlink information 2 and the first one information transmission.

Alternatively, the time information field is used for representing a representation manner of the time information. For example, the value of the time information field is the B22-th value, it represents that the time information of the downlink information 2 is represented through the number of time units. The time units are the time units corresponding to the subcarrier spacing used by the first one information transmission.

Alternatively, the time information field is used for representing a value of the time interval. For example, the value of the time information field is the B35-th value, it indicates that the value of the time interval is t1.

Alternatively, the time information field is used for representing the free combination of the type of the time interval, the representation manner of the time information, and the value of the time interval, which is not limited in the embodiments of the present disclosure.

The information type of the downlink information 2 is indicated through the information type field. For example, the value of the information type field is the C12-th value, it represents that the downlink information 2 is the terminal-specific downlink information.

The transmission channel for the downlink information 2 is indicated through the transmission channel field. For example, the value of the transmission channel field is the D12-th value, it represents that the transmission channel for the downlink information 2 is the terminal-specific channel.

(3) The uplink information 1 is the uplink control signaling (corresponding to an uplink control channel), and the time interval between the starting point of the uplink information 1 and the starting point of the downlink information 1 is T2. The time interval is indicated through the manner of referencing the starting point of the downlink information 1.

The information content of the uplink information 1 includes feedback acknowledgment information, channel state information, and uplink channel demodulation assistance information.

The uplink information 1 is indicated through the information transmission index information field. For example, the value of the information transmission index information field is the A3-th value, it represents that the uplink information 1 is the third one information transmission.

The time information of the uplink information 1 is indicated through the time information field, and the time information field is used for representing the type of the time interval. For example, a value of the time information field is the B13-th value, it represents that the time information of the uplink information 1 is a time unit between the uplink information 1 and the first one information transmission.

Alternatively, the time information field is used for representing a representation manner of the time information. For example, the value of the time information field is the B22-th value, it represents that the time information of the uplink information 1 is represented through the number of time units. The time units are the time units corresponding to the subcarrier spacing used by the first one information transmission.

Alternatively, the time information field is used for representing a value of the time interval. For example, the value of the time information field is the B36-th value, it indicates that the value of the time interval is T2.

Alternatively, the time information field is used for representing the free combination of the type of the time interval, the representation manner of the time information, and the value of the time interval, which is not limited in the embodiments of the present disclosure.

The information type of the uplink information 1 is indicated through the information type field. For example, the value of the information type field is the C3-th value, it represents that the uplink information 1 is the uplink control signaling.

Various information fields included in the uplink information 1 are indicated through the information content field, the information content of the uplink information 1 includes at least one information field, and the information content of the uplink information 1 is indicated through the information content in the at least one information field.

The transmission channel for the uplink information 1 is indicated through the transmission channel field. For example, the value of the transmission channel field is the D3-th value, it represents that the transmission channel for the uplink information 1 is the uplink control channel.

(4) The downlink information 3 is the downlink data (corresponding to the downlink shared channel). The information amount is the first TBS. The time interval between the starting point of the downlink information 3 and the starting point of the downlink information 1 is T3.

In the case where the first TBS represents the value range, the downlink control signaling (downlink information 1) indicates a specific value from the value range, thereby reducing the overhead of the downlink signaling.

The downlink information 3 is indicated through the information transmission index information field. For example, the value of the information transmission index information field is the A4-th value, it represents that the downlink information 3 is the fourth one information transmission.

The time information of the downlink information 3 is indicated through the time information field, and the time information field is used for representing the type of the time interval. For example, a value of the time information field is the B13-th value, it represents that the time information of the uplink information 1 is a time unit between the uplink information 1 and the first one information transmission.

Alternatively, the time information field is used for representing a representation manner of the time information. For example, the value of the time information field is the B22-th value, it represents that the time information of the downlink information 3 is represented through the number of time units. The time units are the time units corresponding to the subcarrier spacing used by the first one information transmission.

Alternatively, the time information field is used for representing a value of the time interval. For example, the value of the time information field is the B37-th value, it indicates that the value of the time interval is T3.

Alternatively, the time information field is used for representing the free combination of the type of the time interval, the representation manner of the time information, and the value of the time interval, which is not limited in the embodiments of the present disclosure.

The information type of the downlink information 3 is indicated through the information type field. For example, the value of the information type field is the C2-th value, it represents that the downlink information 3 is the downlink data.

The transmission channel for the downlink information 3 is indicated through the transmission channel field. For example, the value of the transmission channel field is the D2-th value, it represents that the transmission channel for the downlink information 3 is the downlink shared channel.

The information amount related information of the downlink information 3 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E21-th value, it indicates that the time amount is the first TBS.

Alternatively, the information amount related information field is used for representing a combination of the type of information amount related information and the value of the information amount, which is not limited in the embodiments of the present disclosure.

(5) The uplink information 2 is the uplink data (corresponding to the uplink shared channel). The information amount is the second TBS. The time interval between the starting point of the uplink information 2 and the starting point of the downlink information 1 is T4.

The uplink information 2 is indicated through the information transmission index information field. For example, the value of the information transmission index information field is the A5-th value, it represents that the uplink information 2 is the fifth one information transmission.

The time information of the uplink information 2 is indicated through the time information field, and the time information field is used for representing the type of the time interval. For example, a value of the time information field is the B13-th value, it represents that the time information of the uplink information 1 is a time unit between the uplink information 1 and the first one information transmission.

Alternatively, the time information field is used for representing a representation manner of the time information. For example, the value of the time information field is the B22-th value, it represents that the time information of the uplink information 2 is represented through the number of time units. The time units are the time units corresponding to the subcarrier spacing used by the first one information transmission.

Alternatively, the time information field is used for representing a value of the time interval. For example, the value of the time information field is the B38-th value, it represents that the value of the time interval is T4.

Alternatively, the time information field is used for representing the free combination of the type of the time interval, the representation manner of the time information, and the value of the time interval, which is not limited in the embodiments of the present disclosure.

The information type of the uplink information 2 is indicated through the information type field. For example, the value of the information type field is the C4-th value, it represents that the uplink information 2 is the uplink data.

The transmission channel for the uplink information 2 is indicated through the transmission channel field. For example, the value of the transmission channel field is the D4-th value, it represents that the transmission channel for the uplink information 2 is the uplink shared channel.

The information amount related information of the uplink information 2 is indicated through the information amount related information field, and the information amount related information field is used for representing the type of the information amount related information. For example, the value of the information amount related information field is the E11-th value, it represents that the information amount related information is information that indicates the information amount by using the number of TBSs.

Alternatively, the information amount related information field is used for representing a value of the information amount. For example, the value of the information amount related information field is the E22-th value, it indicates that the time amount is the second TBS.

Alternatively, the information amount related information field is used for representing a combination of the type of information amount related information and the value of the information amount, which is not limited in the embodiments of the present disclosure.

The specific types of multiple information transmissions in a group of information transmissions may be freely combined according to the time information, the information type, the information content, the transmission channel, the information amount related information, the reliability requirement, and the delay requirement in the aforementioned embodiments. The first embodiment and the second embodiment are only exemplary embodiments, and the values of each field are only exemplary values, which are not limited in the present disclosure.

In a possible design of the embodiment, the first communication device is a terminal device, and the second communication device is a network device. In a case where the second communication device receives the first information, the second communication device sends configuration information based on the first information.

In the case where the second communication device receives the first information, the second communication device sends the configuration information based on the transmission characteristic information, and the transmission characteristic information is determined by the first information.

As shown in FIG. 2, information related to the first information transmission group includes: the downlink information 1, the downlink information 2, the downlink information 3, the uplink information 1, and the uplink information 2. Exemplarily, the downlink information 1 is the downlink control signaling, the downlink information 2 and the downlink information 3 are the downlink data, uplink information 1 is the scheduling request, and uplink information 2 is the uplink data.

In a possible design of the embodiment, after the second communication device acquires the transmission characteristic information of the first information transmission group, the second communication device may not configure the scheduling request (uplink information 1) in the subsequent transmission, which can save signaling overhead compared with configuring all the information every time.

In a possible design of the embodiment, the transmission characteristic information includes time information of one of at least two information transmissions. The second communication device configures, based on the time information, transmission resources respectively corresponding to the downlink information 1, the downlink information 2, the downlink information 3, the uplink information 1, and the uplink information 2. Compared with configuring transmission resources corresponding to one piece of information at a time, configuring transmission resources corresponding to multiple pieces of information based on the first information can save the signaling overhead.

In a possible design of the embodiment, the transmission characteristic information includes the type of the information transmitted in at least one of the at least two information transmissions, and transmission resources suitable for different information types are configured according to the type of the information.

In a possible design of the embodiment, the transmission characteristic information includes the content of the information transmitted in at least one of the at least two information transmissions, and the same information content is combined according to the content of the information. For example, the same grant information is combined into one piece of grant information, thereby reducing redundant signaling overhead.

In a possible design of the embodiment, the transmission characteristic information includes a transmission channel for at least one of the at least two information transmissions, and transmission resources corresponding to different transmission channels are configured according to the transmission channel.

In a possible design of the embodiment, the transmission characteristic information includes information amount related information transmitted in at least one of the at least two information transmissions, and the information transmission rate is configured according to the information amount related information, so as to facilitate the network scheduling and the data management.

In a possible design of the embodiment, the transmission characteristic information includes the reliability requirement and/or the delay requirement of the at least one of the at least two information transmissions, and an appropriate transmission protocol may be selected according to the reliability requirement and/or the delay requirement, and transmission resources may be configured according to the reliability requirement and/or the delay requirement, so as to ensure that actual requirements can be met.

In a possible design of the embodiment, the scheduling information is sent based on the transmission characteristic information, and the scheduling information is used for scheduling resources required for the at least two information transmissions.

Optionally, the information types of the at least two information transmissions scheduled by the scheduling information are different, the transmission channels for the at least two information transmissions scheduled by the scheduling information are different, or the information contents of the at least two information transmissions scheduled by the scheduling information are different.

For a function introduction of the transceiver module 610, reference can be made to the contents of operations 310 in the embodiment of FIG. 3.

FIG. 7 illustrates a schematic structural diagram of a communication system 700 according to an exemplary embodiment of the present disclosure. The communication device 700 includes a processor 701, a receiver 702, a transmitter 703, a memory 704, and a bus 707.

The processor 701 includes one or more processing cores. The processor 701 performs various functional applications and information processing through executing software programs and modules.

The receiver 702 and the transmitter 703 may be implemented as one transceiver component. The transceiver component may be a communication chip, and may be referred to as a transceiver. In some embodiments, the receiver 702 may be configured to implement the reception related functions and steps of the transceiver module 610 described above. In some embodiments, the transmitter 703 may be configured to implement the sending related functions and steps of the transceiver module 610 described above.

The memory 704 is connected to the processor 701 via the bus 707.

The memory 704 may be configured to store at least one instruction, and the processor 701 is configured to execute the at least one instruction to implement various steps in the method embodiments described above.

In addition, the memory 704 may be implemented by any type of volatile or non-volatile storage device, or combination thereof. The volatile or non-volatile storage device includes, but is not limited to, a magnetic or an optical disk, an Electrically-Erasable Programmable Read Only Memory (EEPROM), an Erasable Programmable Read Only Memory (EPROM), a Static Random Access Memory (SRAM), Read-Only Memory (ROM), a magnetic memory, a flash memory, and a Programmable Read-Only Memory (PROM).

In some embodiments, the receiver 702 independently perform the reception of the signal/data, or the processor 701 controls the receiver 702 to perform the reception of the signal/data, or the processor 701 requests the receiver 702 to perform the reception of the signal/data, or the processor 701 cooperates with the receiver 702 to perform the reception of the signal/data.

In some embodiments, the transmitter 703 independently sends the signal/data, or the processor 701 controls the transmitter 703 to sends the signal/data, or the processor 701 requests the transmitter 703 to sends the signal/data, or the processor 701 cooperates with the transmitter 703 to sends the signal/data.

In an exemplary embodiment, there is provided a computer-readable storage medium. The computer-readable storage medium stores at least one computer program, and the at least one computer program is loaded and executed by at least one processor to implement the method for information transmission provided by aforementioned various method embodiments.

In an exemplary embodiment, there is provided a computer program product or a computer program. The computer program product or the computer program includes computer instructions stored in a computer-readable storage medium, a processor acquires the computer instructions from the computer-readable storage medium, and the processor executes the computer instructions to implement the method for information transmission in the aforementioned various method embodiments.

Those of ordinary skill in the art may understand that all or a part of the steps for implementing the aforementioned embodiments may be implemented by the hardware, or implemented by a program instructing a related hardware. The program may be stored in a computer-readable storage medium, and the above-mentioned storage medium may be the ROM, the magnetic disk, the optical disk, or the like.

The above are only optional embodiments of the present disclosure, and are not intended to limit the present disclosure. Any modification, equivalent substitution, improvement, etc. made within the spirit and principles of the present disclosure shall be included in the scope of protection of the present disclosure.

## Claims

1. A method for information transmission, performed by a first communication device, the method comprising:
sending or receiving first information, wherein the first information is used for determining transmission characteristic information corresponding to a first information transmission group between the first communication device and a second communication device, and the first information transmission group comprises at least two information transmissions.

2. The method of claim 1, wherein the transmission characteristic information comprises at least one of:
time information of one of the at least two information transmissions; a type of information transmitted in one of the at least two information transmissions; a content of information transmitted in one of the at least two information transmissions; a format of information transmitted in one of the at least two information transmissions; a transmission channel for one of the at least two information transmissions; information amount related information transmitted in one of the at least two information transmissions; a reliability requirement of one of the at least two information transmissions; or a delay requirement of one of the at least two information transmissions.

3. The method of claim 1 or 2, wherein the first information comprises at least one piece of sub-information, and a number of the at least one piece of sub-information is less than or equal to a number of the at least two information transmissions,
wherein a single piece of sub-information among the at least one piece of sub-information is used for determining transmission characteristic information of at least one of the at least two information transmissions.

4. The method of claim 3, wherein the single piece of sub-information is used for carrying at least one of:
number index information of the single piece of sub-information; time information of at least one of the at least two information transmissions; a type of information transmitted in at least one of the at least two information transmissions; a content of information transmitted in at least one of the at least two information transmissions; a format of information transmitted in at least one of the at least two information transmissions; a transmission channel for at least one of the at least two information transmissions; information amount related information transmitted in at least one of the at least two information transmissions; a reliability requirement of at least one of the at least two information transmissions; or a delay requirement of at least one information transmission of the at least two information transmissions.

5. The method of claim 2 or 4, wherein the time information is represented through an absolute time length or a number of time units.

6. The method of claim 5, wherein different subcarrier spacing is used for the at least two information transmissions, and the time units comprise at least one of:
time units corresponding to a subcarrier spacing used by a first one of the at least two information transmissions; time units corresponding to a subcarrier spacing used by a first one of two adjacent information transmissions among the at least two information transmissions; time units corresponding to a subcarrier spacing used by a second one of the two adjacent information transmissions among the at least two information transmissions; time units corresponding to a subcarrier spacing used by a first one of two associated information transmissions among the at least two information transmissions; time units corresponding to a subcarrier spacing used by a second one of the two associated information transmissions among the at least two information transmissions; time units corresponding to a subcarrier spacing used by a first one downlink information transmission among the at least two information transmissions; time units corresponding to a subcarrier spacing used by a first one uplink information transmission among the at least two information transmissions; or time units corresponding to a reference subcarrier spacing pre-configured by a network device.

7. The method of claim 2 or 4 or 5 or 6, wherein a value of the time information is a first value.

8. The method of claim 7, wherein the first value is a value in a first value set, or the first value is a value within a first value range.

9. The method of claim 8, wherein the first information comprises the first value set, or the first information comprises the first value range.

10. The method of claim 2 or 4, wherein the time information comprises at least one of:
a time interval or a time offset between the one information transmission and an adjacent previous information transmission; a time interval or a time offset between the one information transmission and an adjacent subsequent information transmission; a time interval or a time offset between the one information transmission and a first one of the at least two information transmissions; a time interval or a time offset between the one information transmission and a last one of the at least two information transmissions.

11. The method of claim 2 or 4, wherein the type of the information comprises at least one of:
downlink information; uplink information; downlink synchronization information; broadcast information; multicast information; unicast information; terminal-specific downlink information; downlink control information; downlink data information; uplink synchronization information; terminal-specific uplink information; uplink control information; uplink data information; or a reference signal.

12. The method of claim 11, wherein the type of the information is used for determining a physical channel used for the one information transmission, and a correspondence between the type of the information and the physical channel comprises at least one of:
the downlink information corresponds to a downlink channel; the uplink information corresponds to an uplink channel; the downlink synchronization information corresponds to a downlink synchronization channel; the broadcast information corresponds to a broadcast channel; the multicast information corresponds to a multicast channel; the unicast information corresponds to a unicast channel; the terminal-specific downlink information corresponds to a terminal-specific channel; the downlink control information corresponds to a downlink control channel; the downlink data information corresponds to a downlink shared channel; the uplink synchronization information corresponds to an uplink synchronization channel; the terminal-specific uplink information corresponds to the terminal-specific channel; the uplink control information corresponds to an uplink control channel; or the uplink data information corresponds to an uplink shared channel.

13. The method of claim 2 or 4, wherein the type of the information comprises at least one of:
configuration information; grant information; allocation information; downlink control signaling; physical layer control signaling; higher layer signaling; Radio Resource Control (RRC) signaling; Media Access Control (MAC) signaling; uplink control signaling; feedback acknowledgement information; channel state information; a Scheduling Request (SR); Buffer Status Report (BSR); or uplink channel demodulation assistance information.

14. The method of claim 2 or 4, wherein the content of the information comprises uplink data and/or downlink data.

15. The method of claim 14, wherein the uplink data and/or downlink data comprises at least one of: a data packet; a Transport Block (TB); or a Protocol Data Unit (PDU).

16. The method of claim 2 or 4, wherein the content of the information comprises an uplink synchronization signal and/or a downlink synchronization signal.

17. The method of claim 16, wherein the uplink synchronization signal and/or the downlink synchronization signal comprises at least one of: a Synchronization Signal Block (SSB); a Physical Random Access Channel (PRACH); a Primary Synchronization Signal (PSS); or a Secondary Synchronization Signal (SSS).

18. The method of claim 2 or 4, wherein the content of the information comprises an uplink reference signal and/or a downlink reference signal.

19. The method of claim 18, wherein the uplink reference signal and/or the downlink reference signal comprises at least one of: a DeModulation Reference Signal (DMRS); a Channel State Information Reference Signal (CSI-RS); a Sounding Reference Signal (SRS); or a Phase Tracking Reference Signal (PTRS).

20. The method of claim 2 or 4, wherein the transmission channel comprises at least one of: a downlink channel; a downlink synchronization channel; a broadcast channel; a multicast channel; a unicast channel; a terminal-specific channel; a downlink control channel; a downlink shared channel; an uplink channel; an uplink synchronization channel; an uplink control channel; or an uplink shared channel.

21. The method of claim 2 or 4, wherein the information amount related information comprises at least one of: information for indicating information amount; information for determining information amount; or a sequence length of a first sequence,
wherein the first sequence is a sequence used for generating a reference signal or a synchronization signal.

22. The method of claim 21, wherein the information for indicating the information amount comprises at least one of:
a value of the information amount; statistical information of the information amount; a value of an information amount level; or an interval of the information amount level,
wherein the information amount level is used for indicating a value range of the information amount.

23. The method of claim 21, wherein the information for determining the information amount comprises at least one of:
the format of the information; or an algorithm used for calculating the information amount.

24. The method of claim 23, wherein the format of the information comprises at least one of: a Downlink Control Information (DCI) format; or an Uplink Control Information (UCI) format.

25. The method of any one of claims 1 to 24, wherein the first information transmission group has periodicity or does not have periodicity.

26. The method of any one of claims 1 to 25, wherein
the first communication device is a terminal device, and the second communication device is a network device; or,
the first communication device is a network device, and the second communication device is a terminal device.

27. A first device for information transmission, comprising:
a transceiver module, configured to send or receive first information, wherein the first information is used for determining transmission characteristic information corresponding to the first information transmission group between the first device for information transmission and a second device for information transmission, and the first information transmission group comprises at least two information transmissions.

28. A communication device, comprising:
a processor; a transceiver connected to the processor; and a memory configured to store executable instructions of the processor,
wherein the processor is configured to load and execute the executable instructions to implement the method for information transmission of any one of claims 1 to 26.

29. A computer-readable storage medium, storing at least one program, wherein the at least one program is loaded and executed by a processor to implement the method for information transmission of any one of claims 1 to 26.

30. A computer program product comprising computer instructions stored in a computer-readable storage medium, wherein a processor acquires the computer instructions from the computer-readable storage medium, and the processor executes the computer instructions to implement the method for information transmission of any one of claims 1 to 26.
